(19) Europäisches Patentamt
European Patent Office
Office européen des brevets

(11) EP 3 845 590 A1

(12) # EUROPEAN PATENT APPLICATION
published in accordance with Art. 153(4) EPC

(43) Date of publication:
**07.07.2021 Bulletin 2021/27**

(21) Application number: **19854453.8**

(22) Date of filing: **28.08.2019**

(51) Int Cl.:
***C08L 1/02*** *(2006.01)* ***C08K 3/08*** *(2006.01)*
***C08K 5/19*** *(2006.01)* ***C08L 101/00*** *(2006.01)*

(86) International application number:
**PCT/JP2019/033800**

(87) International publication number:
**WO 2020/045533 (05.03.2020 Gazette 2020/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **30.08.2018 JP 2018162035**

(71) Applicant: **Oji Holdings Corporation**
**Chuo-ku**
**Tokyo 104-0061 (JP)**

(72) Inventors:
- **ZHAO, Mengchen**
  **Tokyo 104-0061 (JP)**
- **TODOROKI, Yusuke**
  **Tokyo 104-0061 (JP)**
- **NOGUCHI, Yuichi**
  **Tokyo 104-0061 (JP)**

(74) Representative: **Godemeyer Blum Lenze Patentanwälte**
**Partnerschaft mbB - werkpatent**
**An den Gärten 7**
**51491 Overath (DE)**

(54) **FIBROUS CELLULOSE-CONTAINING COMPOSITION, LIQUID COMPOSITION, AND MOLDED BODY**

(57) It is an object of the present invention to provide an ultrafine cellulose fiber-containing composition, regarding which an ultrafine cellulose fiber-dispersed organic solvent slurry can exhibit high viscosity and high transparency. The present invention relates to a cellulose fiber-containing composition comprising cellulose fibers with a fiber width of 1000 nm or less having anionic groups, and metal ions, wherein the cellulose fiber-containing composition comprising organic onium ions as counterions of the anionic groups, and when a solid in the cellulose fiber-containing composition is converted to an absolute dry solid, the content of the metal ions in the absolute dry solid is 80 ppm or more and 700 ppm or less.

[Figure 1]

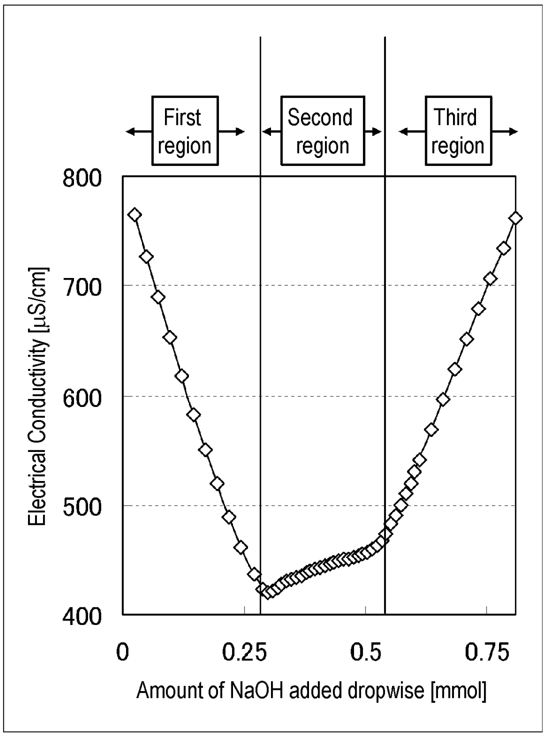


EP 3 845 590 A1

**Description**

Technical Field

The present invention relates to a cellulose fiber-containing composition, a liquid composition, and a molded body.

Background Art

Conventionally, cellulose fibers have been broadly utilized in clothes, absorbent articles, paper products, and the like. As cellulose fibers, ultrafine cellulose fibers having a fiber diameter of 1 μm or less have been known, as well as cellulose fibers having a fiber diameter of 10 μm or more and 50 μm or less. Such ultrafine cellulose fibers have attracted attention as novel materials, and the intended use thereof has been highly diversified. For example, the development of sheets, resin composites, and thickeners comprising the ultrafine cellulose fibers has been promoted.

In general, since ultrafine cellulose fibers are stably dispersed in an aqueous solvent, the ultrafine cellulose fibers are provided in the state of an aqueous dispersed solution, and are often used for various types of intended uses. On the other hand, when ultrafine cellulose fibers are mixed with a resin to produce a composite or the like, it is required to use the ultrafine cellulose fibers by being mixed with an organic solvent. As a technique to meet such a request, a technique of dispersing ultrafine cellulose fibers in a dispersion medium containing an organic solvent to produce an ultrafine cellulose fiber-containing dispersed solution has been studied (Patent Documents 1 to 3).

For example, Patent Document 1 discloses an ultrafine cellulose fiber composite, in which a surfactant is adsorbed on ultrafine cellulose fibers having carboxy groups. In this patent document, a method comprising fibrillating cellulose fibers in an aqueous solvent, then agglutinating the ultrafine cellulose fibers, and then dispersing the resultant in an organic solvent, and a method of fibrillating cellulose fibers in an organic solvent to obtain ultrafine cellulose fibers, are disclosed. In addition, Patent Document 2 discloses a method for producing an ultrafine cellulose fiber-dispersed solution, comprising a step of preparing an aqueous dispersed solution of ultrafine cellulose fibers having carboxylate-type groups, a step of substituting the carboxylate-type groups with the carboxylic acid amine salt-type groups of amines having organic groups, and a step of dispersing ultrafine cellulose fibers having the carboxylic acid amine salt-type groups in an organic solvent. Moreover, Patent Document 3 discloses an oil-based ink composition comprising ultrafine cellulose fibers, in which polyether amine having a predetermined structure binds to a part or all of anionic functional groups possessed by the ultrafine cellulose fibers, an organic solvent, and a coloring agent.

Prior Art Documents

Patent Documents

Patent Document 1: Japanese Patent Publication No. 2011-140738 A
Patent Document 2: Japanese Patent Publication No. 2012-021081 A
Patent Document 3: Japanese Patent Publication No. 2018-044101 A

Summary of Invention

Object to be Solved by the Invention

In general, it has been known that since an organic solvent has a lower dielectric constant than that of water, electrostatic repulsive force necessary for dispersion of ultrafine cellulose fibers is hardly obtained from the organic solvent. Hence, dispersion of ultrafine cellulose fibers has tended to become insufficient in an organic solvent. If dispersion of ultrafine cellulose fibers became insufficient in an organic solvent, the viscosity of an organic solvent slurry in which ultrafine cellulose fibers are dispersed becomes low, or the transparency thereof would be decreased in some cases.

In view of the foregoing, in order to solve the aforementioned problems of the prior art, the present inventors have proceeded with studies for the purpose of providing an ultrafine cellulose fiber-containing composition, regarding which an ultrafine cellulose fiber-dispersed organic solvent slurry can exhibit high viscosity and high transparency.

Means for Solving the Object

As a result of intensive studies directed towards achieving the aforementioned object, the present inventors

have found that, in a cellulose fiber-containing composition comprising organic onium ions as counterions of anionic groups possessed by ultrafine cellulose fibers, the amount of metal ions contained in the cellulose fiber-containing composition is set within a predetermined range, so that an organic solvent slurry, in which the ultrafine cellulose fiber-containing composition is dispersed, can exhibit high viscosity and high transparency.

Specifically, the present invention has the following configuration.

[1] A cellulose fiber-containing composition comprising cellulose fibers with a fiber width of 1000 nm or less having anionic groups, and metal ions, wherein
the cellulose fiber-containing composition comprising organic onium ions as counterions of the anionic groups, and when a solid in the cellulose fiber-containing composition is converted to an absolute dry solid, the content of the metal ions in the absolute dry solid is 80 ppm or more and 700 ppm or less.
[2] The cellulose fiber-containing composition according to [1], wherein the amount of the anionic groups in the cellulose fibers is 0.50 mmol/g or more.
[3] The cellulose fiber-containing composition according to [1] or [2], wherein the organic onium ions satisfy at least one condition selected from the following (a) and (b):

(a) containing a hydrocarbon group having 5 or more carbon atoms; and
(b) having a total carbon number of 17 or more.

[4] The cellulose fiber-containing composition according to any one of [1] to [3], wherein the organic onium ions are organic ammonium ions.
[5] The cellulose fiber-containing composition according to any one of [1] to [4], wherein the metal ions are at least one type selected from alkali metal ions and alkaline earth metal ions.
[6] The cellulose fiber-containing composition according to any one of [1] to [5], wherein the solid concentration is 80% by mass or more.
[7] The cellulose fiber-containing composition according to any one of [1] to [6], which is a solid form.
[8] The cellulose fiber-containing composition according to any one of [1] to [7], which is a particulate material.
[9] A liquid composition formed by mixing the cellulose fiber-containing composition according to any one of [1] to [8] with an organic solvent.
[10] The liquid composition according to [9], further comprising a resin.
[11] A molded body formed from the cellulose fiber-containing composition according to any one of [1] to [8] or the liquid composition according to [9] or 10.

Advantageous Effects of Invention

According to the present invention, an ultrafine cellulose fiber-containing composition, regarding which an ultrafine cellulose fiber-dispersed organic solvent slurry can exhibit high viscosity and high transparency, can be provided.

Brief Description of Drawings

Figure 1 is a graph showing the relationship between the amount of NaOH added dropwise to cellulose fibers having phosphoric acid groups and electrical conductivity.
Figure 2 is a graph showing the relationship between the amount of NaOH added dropwise to cellulose fibers having carboxy groups and electrical conductivity.

Embodiments of Carrying out the Invention

Hereinafter, the present invention will be described in detail. The description for components described below will be based on representative embodiments or specific examples; however, the present invention will not be limited to such embodiments.

(Cellulose fiber-containing composition)

The present invention relates to a cellulose fiber-containing composition comprising cellulose fibers with a fiber width of 1000 nm or less having anionic groups, and metal ions. The cellulose fiber-containing composition of the present invention comprises organic onium ions as counterions of the anionic groups, and when a solid in the cellulose fiber-containing composition is converted to an absolute dry solid, the content of the metal ions in the absolute dry solid is 80 ppm or more and 700 ppm or less. It is to be noted that, in the present description, cellulose fibers having a fiber width of 1000 nm or less are also referred to as "ultrafine cellulose fibers."

Since the cellulose fiber-containing composition of the present invention has the above-described configuration, when the ultrafine cellulose fiber-containing composition is dispersed in an organic solvent, the organic solvent slurry can exhibit high viscosity and high transparency. The cellulose fiber-containing composition of the present invention comprises organic onium ions as counterions of the anionic groups possessed by the ultrafine cellulose fibers, and when the amount of metal ions contained in the cellulose fiber-containing composition is set within a predetermined range, it exhibits favorable dispersibility in an organic solvent. Thus, an organic solvent slurry formed by dispersing the ultrafine cellulose fiber-containing composition in the organic solvent has high viscosity and high transparency.

The viscosity of an organic solvent slurry obtained by dispersing ultrafine cellulose fibers in an organic solvent depends on the type of the organic solvent serving as a dispersion medium and the concentration of the ultrafine cellulose fibers in the dispersed solution. For example, when the concentration of the ultrafine cellulose fibers in the organic solvent slurry is 2.0% by mass and the organic solvent is N-methyl-2-pyrrolidone (NMP), the viscosity of the dispersed solution is preferably 500 mPa·s or more, more preferably 1000 mPa·s or more, further preferably 3000 mPa·s or more, still further preferably 5000 mPa·s or more, and particularly preferably 8000 mPa·s or more. On the other hand, when the concentration of the ultrafine cellulose fibers in the organic solvent slurry is 4.0% by mass and the organic solvent is toluene, the viscosity of the dispersed solution is preferably 500 mPa·s or more, more preferably 1000 mPa·s or more, further preferably 2000 mPa·s or more, still further preferably 3000 mPa·s or more, and particularly preferably 4000 mPa·s or more. When the concentration of the ultrafine cellulose fibers in the organic solvent slurry is 2.0% by mass and the organic solvent is methanol, the viscosity of the dispersed solution is preferably 4000 mPa·s or more, more preferably 6000 mPa·s or more, further preferably 8000 mPa·s or more, still further preferably 10000 mPa·s or more, and particularly preferably 15000 mPa·s or more.

Upon the measurement of the viscosity of an organic solvent slurry obtained by dispersing ultrafine cellulose fibers in an organic solvent to a solid concentration of 2.0% by mass or 4.0% by mass is left at rest at 25°C for 24 hours, and thereafter, the viscosity is measured using a type B viscometer. As such a type B viscometer, for example, the analog viscometer T-LVT manufactured by BLOOKFIELD can be used. Regarding measurement conditions, the viscosity of the organic solvent slurry is measured, while it is rotated at 25°C at 3 rpm for 3 minutes. Besides, upon the measurement of the viscosity, when the solvent is a non-polar solvent (with a dielectric constant of less than 5.0), the solid concentration is set at 4.0% by mass. When the solvent is not such a non-polar solvent, the solid concentration is set at 2.0% by mass.

The light transmittance at a wavelength of 600 nm of an organic solvent slurry obtained by dispersing ultrafine cellulose fibers in an organic solvent depends on the type of the organic solvent serving as a dispersion medium and the concentration of the ultrafine cellulose fibers in the dispersed solution. For example, when the concentration of the ultrafine cellulose fibers in the organic solvent slurry is 2.0% by mass and the organic solvent is N-methyl-2-pyrrolidone (NMP), the light transmittance at a wavelength of 600 nm of the dispersed solution is preferably 50% or more, more preferably 70% or more, and further preferably 80% or more. On the other hand, when the concentration of the ultrafine cellulose fibers in the organic solvent slurry is 4.0% by mass and the organic solvent is toluene, the light transmittance at a wavelength of 600 nm of the dispersed solution is preferably 60% or more, more preferably 70% or more, and further preferably 75% or more. When the concentration of the ultrafine cellulose fibers in the organic solvent slurry is 2.0% by mass and the organic solvent is methanol, the light transmittance at a wavelength of 600 nm of the dispersed solution is preferably 60% or more, more preferably 65% or more, and further preferably 70% or more.

Upon the measurement of the light transmittance at a wavelength of 600 nm of an organic solvent slurry obtained by dispersing ultrafine cellulose fibers in an organic solvent, the light transmittance at a wavelength of 600 nm of the organic solvent slurry obtained by dispersing the ultrafine cellulose fibers in the organic solvent to a solid concentration of 2.0% by mass or 4.0% by mass is measured. The light transmittance at a wavelength of 600 nm is measured using an ultraviolet and visible spectrophotometer and a liquid glass cell having an optical path length of 1 cm. As such an ultraviolet and visible spectrophotometer, for example, SP-3000 Nano manufactured by Optima Co., Ltd. can be used. As such a liquid glass cell, MG-40 manufactured by Fujiwara Scientific Company Co., Ltd. (inverse optical path) can be used. Besides, the zero point is measured with ion exchange water which is placed in the same glass cell. In addition, upon the measurement of the light transmittance, when the solvent is a non-polar solvent (with a dielectric constant of less than 5.0), the solid concentration is set at 4.0% by mass. When the solvent is not such a non-polar solvent, the solid concentration is set at 2.0% by mass.

The ultrafine cellulose fibers used in the present invention have favorable dispersibility in an organic solvent, and no precipitate is generated in the dispersed solution. Hence, an organic solvent slurry obtained by dispersing the ultrafine cellulose fibers in an organic solvent has high viscosity and high transparency. In addition, since the ultrafine cellulose fibers used in the present invention have favorable dispersibility in an organic solvent, the energy necessary for dispersion of the ultrafine cellulose fibers in an organic solvent can be reduced.

The cellulose fiber-containing composition of the present invention is not particularly limited, as long as it

comprises ultrafine cellulose fibers containing anionic groups and organic onium serving as counterions of the anionic groups, and metal ions. The cellulose fiber-containing composition of the present invention is preferably a concentrate of the above-described ultrafine cellulose fibers. The form of the ultrafine cellulose fiber-containing composition may be a liquid form, a gel form, and a solid form. Among others, the ultrafine cellulose fiber-containing composition is preferably a solid form.

When the cellulose fiber-containing composition of the present invention is a solid form, the shape of the solid form is not particularly limited. For example, the solid form is preferably a sheet material or a particulate material, and is more preferably a particulate material. The term "particulate material" is used herein to mean a powdery and/or particulate substance. It is to be noted that a powdery substance is smaller than a particulate substance. In general, the powdery substance means a fine particle having a particle diameter of 1 nm or more and less than 0.1 mm, whereas the particulate substance means a particle having a particle diameter of 0.1 mm or more and 10 mm or less, but the definitions are not particularly limited thereto. In the present description, the particulate material may also be referred to as a "powder." In the present description, the particle diameter of a particulate material can be measured and/or calculated by a laser diffraction method. Specifically, it is a value measured using a laser diffraction scattering particle diameter distribution analyzer (Microtrac 3300 EXII, Nikkiso Co., Ltd.).

The solid concentration of the cellulose fiber-containing composition is preferably 80% by mass or more, more preferably 85% by mass or more, and further preferably 90% by mass or more, with respect to the total mass of the cellulose fiber-containing composition. Besides, the upper limit value of the solid concentration of the cellulose fiber-containing composition is not particularly limited, and it may also be 100% by mass.

In the cellulose fiber-containing composition of the present invention, the content of water is preferably small. The water content in the cellulose fiber-containing composition is preferably 20% by mass or less, and more preferably 10% by mass or less, with respect to the total mass of the cellulose fiber-containing composition. Also, the water content in the cellulose fiber-containing composition is preferably 0% by mass. Thus, since the content of water is low in the cellulose fiber-containing composition of the present invention, the amount of water in an organic solvent slurry obtained by dispersion of the ultrafine cellulose fibers in an organic solvent is suppressed. It is to be noted that the water content in the cellulose fiber-containing composition can be measured by placing 200 mg of the present cellulose fiber-containing composition on a moisture meter (manufactured by A & D Co., Ltd., MS-70), and then heating it at 140°C. From the measured amount of water, the water content in the cellulose fiber-containing composition can be calculated.

The cellulose fiber-containing composition of the present invention is also featured in that the content of anions derived from strong acid, such as halide ions or sulfate ions, is suppressed. Since such anions derived from strong acid, such as halide ions or sulfate ions, have metal corrosiveness or rubber corrosiveness, it is said that a cellulose fiber-containing composition in which the content of such anions is suppressed, and a molded body comprising the cellulose fiber-containing composition, do not have metal corrosive action and rubber corrosive action.

When the solid in the cellulose fiber-containing composition is converted to an absolute dry solid, the content of chloride ions in such an absolute dry solid is preferably small, if the organic onium ions obtained by neutralization of primary to tertiary amines are counterions of the anionic groups. Specifically, the content of chloride ions in the absolute dry solid of the cellulose fiber-containing composition is preferably 100 ppm or less, more preferably 90 ppm or less, and further preferably 80 ppm or less. When organic onium ions other than the organic onium ions obtained by neutralization of primary to tertiary amines are counterions of the organic onium ions, the content of chloride ions in the absolute dry solid of the cellulose fiber-containing composition may be 4000 ppm or less, or may also be 2500 ppm or less.

Upon the measurement of the content of chloride ions, first, the cellulose fiber-containing composition is dried under conditions of 105°C until it becomes absolutely dried (for example, for 3 hours or more). Subsequently, the absolute dry solid is burnt in an oxygen atmosphere in accordance with JIS Z 7302-6, using a total chlorine content tester (manufactured by Yoshida Seisakusho Co., Ltd., cylinder type), and thereafter, the amount of chloride ions contained in the absolute dry solid of an ultrafine cellulose fiber concentrate is measured using ion chromatography (manufactured by Thermo Fisher Scientific, ICS2100).

When the counterions of the anionic groups contained in the ultrafine cellulose fibers are converted to hydrogen ions ($H^+$), a method of mixing hydrochloric acid or sulfuric acid into the cellulose fiber-containing composition may be selected. In this case, there is a case where chloride ions or sulfate ions derived from the hydrochloric acid or the sulfuric acid may remain in the cellulose fiber-containing composition. In the present invention, the counterions of the anionic groups contained in the ultrafine cellulose fibers are not converted to hydrogen ions, but are converted to sodium ions ($Na^+$), and a cellulose fiber-containing composition is obtained. Thus, the content of chloride ions can be set within a preferred range, and thereby, metal corrosive action or rubber corrosive action is suppressed.

(Ultrafine cellulose fibers)

The cellulose fiber-containing composition of the present invention comprises cellulose fibers with a fiber width of 1000 nm or less having anionic groups. The fiber width of the cellulose fibers having the anionic groups is preferably

100 nm or less, and is more preferably 8 nm or less. It is to be noted that the fiber width of the cellulose fibers can be measured, for example, by electron microscopic observation.

The average fiber width of the cellulose fibers is, for example, 1000 nm or less. For example, the average fiber width is preferably 2 nm or more and 1000 nm or less, more preferably 2 nm or more and 100 nm or less, further preferably 2 nm or more and 50 nm or less, and particularly preferably 2 nm or more and 10 nm or less. When the average fiber width of the cellulose fibers is set to be 2 nm or more, dissolution of the cellulose fibers as cellulose molecules in water is suppressed, and the effects of the cellulose fibers, such as the improvement of strength, rigidity, and dimensional stability, can be easily expressed. It is to be noted that the cellulose fibers are, for example, monofibrous cellulose.

The average fiber width of cellulose fibers is measured as follows, for example, using an electron microscope. First, an aqueous suspension of cellulose fibers having a concentration of 0.05% by mass or more and 0.1% by mass or less is prepared, and this suspension is casted onto a hydrophilized carbon film-coated grid as a sample for TEM observation. If the sample contains wide fibers, SEM images of the surface of the suspension casted onto glass may be observed. Subsequently, the sample is observed using electron microscope images taken at a magnification of 1000x, 5000x, 10000x, or 50000x, depending on the widths of fibers used as observation targets. However, the sample, the observation conditions, and the magnification are adjusted so as to satisfy the following conditions:

(1) A single straight line X is drawn in any given portion in an observation image, and 20 or more fibers intersect with the straight line X.
(2) A straight line Y, which intersects perpendicularly with the aforementioned straight line in the same image as described above, is drawn, and 20 or more fibers intersect with the straight line Y.

The widths of the fibers intersecting the straight line X and the straight line Y in the observation image meeting the above-described conditions are visually read. Three or more sets of observation images of surface portions, which are at least not overlapped, are obtained. Thereafter, the widths of the fibers intersecting the straight line X and the straight line Y are read in each image. Thereby, at least 120 fiber widths (20 fibers $\times$ 2 $\times$ 3 = 120) are thus read. The average value of the read fiber widths is defined to be the average fiber width of cellulose fibers.

The fiber length of the cellulose fibers is not particularly limited, and for example, it is preferably 0.1 $\mu$m or more and 1000 $\mu$m or less, more preferably 0.1 $\mu$m or more and 800 $\mu$m or less, and further preferably 0.1 $\mu$m or more and 600 $\mu$m or less. By setting the fiber length within the above-described range, destruction of the crystalline region of the cellulose fibers can be suppressed. In addition, the viscosity of a slurry of the cellulose fibers can also be set within an appropriate range. It is to be noted that the fiber length of the cellulose fibers can be obtained by an image analysis using TEM, SEM or AFM.

The cellulose fibers preferably have a type I crystal structure. Herein, the fact that the cellulose fibers have a type I crystal structure may be identified by a diffraction profile obtained from a wide angle X-ray diffraction photograph using CuK$\alpha$ ($\lambda$ = 1.5418 Å) monochromatized with graphite. Specifically, it may be identified based on the fact that there are typical peaks at two positions near $2\theta$ = 14° or more and 17° or less, and near $2\theta$ = 22° or more and 23° or less. The percentage of the type I crystal structure occupied in the ultrafine cellulose fibers is, for example, preferably 30% or more, more preferably 40% or more, and further preferably 50% or more. Thereby, more excellent performance can be expected, in terms of heat resistance and the expression of low linear thermal expansion. The crystallinity can be obtained by measuring an X-ray diffraction profile and obtaining it according to a common method (Seagal et al., Textile Research Journal, Vol. 29, p. 786, 1959).

The aspect ratio (fiber length/fiber width) of the cellulose fibers is not particularly limited, and for example, it is preferably 20 or more and 10000 or less, and more preferably 50 or more and 1000 or less. By setting the aspect ratio at the above-described lower limit value or more, a sheet comprising ultrafine cellulose fibers is easily formed. By setting the aspect ratio at the above-described upper limit or less, when the cellulose fibers are treated, for example, as an aqueous dispersed solution, operations such as dilution are preferably easily handled.

The cellulose fibers in the present embodiment have, for example, both a crystalline region and an amorphous region. In particular, ultrafine cellulose fibers, which have both a crystalline region and an amorphous region and also have a high aspect ratio, are realized by the after-mentioned method for producing ultrafine cellulose fibers.

The cellulose fibers have anionic groups. The anionic group is preferably at least one selected from, for example, a phosphoric acid group or a phosphoric acid group-derived substituent (which is simply referred to as a "phosphoric acid group" at times), a carboxy group or a carboxy group-derived substituent (which is simply referred to as a "carboxy group" at times), and a sulfone group or a sulfone group-derived substituent (which is simply referred to as a "sulfone group" at times). The anionic group is more preferably at least one selected from a phosphoric acid group and a carboxy group; and is particularly preferably a phosphoric acid group. Since a phosphoric acid group has a larger number of anionic groups per molecule thereof, compared with a carboxy group, etc., the phosphoric acid group can have a larger number of organic onium ions as counterions. It is thereby considered that a phosphoric acid group can further enhance the dispersibility of the ultrafine cellulose fibers, etc.

The phosphoric acid group or the phosphoric acid group-derived substituent is, for example, a substituent represented by the following formula (1), and it is generalized as a phosphorus oxoacid group or a substituent derived from phosphorus oxoacid.

The phosphoric acid group is, for example, a divalent functional group corresponding to a phosphoric acid from which a hydroxyl group is removed. Specifically, it is a group represented by $-PO_3H_2$. The substituent derived from the phosphoric acid group may include substituents such as salts of phosphoric acid groups and phosphoric acid ester groups. Besides, the substituent derived from the phosphoric acid group may be comprised as a condensed phosphoric acid group (e.g. a pyrophosphoric acid group) in the cellulose fibers. Moreover, the phosphoric acid group may be, for example, a phosphorous acid group (phosphonic acid group), and the substituent derived from the phosphoric acid group may be salts of a phosphorous acid group, a phosphorous acid ester group, and the like.

[Formula 1]

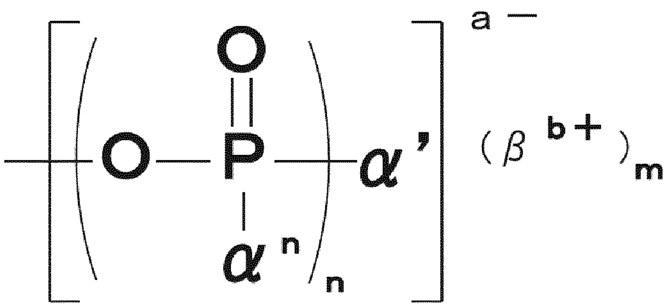

(1)

In the above Formula (1), a, b, and n each represent a natural number (provided that a = b x m); an "a" number of $\alpha^1$, $\alpha^2$, ..., $\alpha^n$ and $\alpha'$ is $O^-$, and the rest is either R or OR. All of $\alpha^n$ and $\alpha'$ may also be $O^-$. R each represents a hydrogen atom, a saturated straight chain hydrocarbon group, a saturated branched chain hydrocarbon group, a saturated cyclic hydrocarbon group, an unsaturated straight chain hydrocarbon group, an unsaturated branched chain hydrocarbon group, an unsaturated cyclic hydrocarbon group, an aromatic group, or a derivative group thereof. Besides, at least a portion of $\beta^{b+}$ is an organic onium ion as described later.

Examples of the saturated straight chain hydrocarbon group may include a methyl group, an ethyl group, an n-propyl group, and an n-butyl group, but are not particularly limited thereto. Examples of the saturated branched chain hydrocarbon group may include an i-propyl group and a t-butyl group, but are not particularly limited thereto. Examples of the saturated cyclic hydrocarbon group may include a cyclopentyl group and a cyclohexyl group, but are not particularly limited thereto. Examples of the unsaturated straight chain hydrocarbon group may include a vinyl group and an allyl group, but are not particularly limited thereto. Examples of the unsaturated branched chain hydrocarbon group may include an i-propenyl group and a 3-butenyl group, but are not particularly limited thereto. Examples of the unsaturated cyclic hydrocarbon group may include a cyclopentenyl group and a cyclohexenyl group, but are not particularly limited thereto. Examples of the aromatic group may include a phenyl group and a naphthyl group, but are not particularly limited thereto.

Moreover, examples of the derivative group of the R may include functional groups such as a carboxy group, a hydroxy group or an amino group, in which at least one type selected from the functional groups is added to or substituted with the main chain or side chain of the above-described various types of hydrocarbon groups, but are not particularly limited thereto. Furthermore, the number of carbon atoms constituting the main chain of the above-described R is not particularly limited, and it is preferably 20 or less, and more preferably 10 or less. By setting the number of carbon atoms constituting the main chain of the R within the above-described range, the molecular weight of phosphoric acid groups can be adjusted in a suitable range, permeation thereof into a fiber raw material can be facilitated, and the yield of the ultrafine cellulose fibers can also be enhanced.

$\beta^{b+}$ is a mono- or more-valent cation consisting of an organic or inorganic matter. Examples of the mono- or more-valent cation consisting of an organic matter may include an aliphatic ammonium and an aromatic ammonium, and at least a portion of $\beta^{b+}$ is an organic onium ion as described later. Examples of the mono- or more-valent cation consisting of an inorganic matter may include alkali metal ions such as sodium, potassium or lithium ions, divalent metal cations such as calcium or magnesium ions, and hydrogen ions, but are not particularly limited thereto. These can be applied alone as a single type or in combination of two or more types. As such mono- or more-valent cations consisting of an organic or inorganic matter, sodium or potassium ions, which hardly cause the yellowing of a fiber raw material containing $\beta$ upon heating and are industrially easily applicable, are preferable, but are not particularly limited thereto.

The amount of anionic groups introduced into the cellulose fibers (the amount of anionic groups) is, per 1 g

(mass) of the cellulose fibers, preferably 0.10 mmol/g or more, more preferably 0.20 mmol/g or more, further preferably 0.50 mmol/g or more, and particularly preferably 1.00 mmol/g or more. On the other hand, the amount of anionic groups introduced into the cellulose fibers is, for example, per 1 g (mass) of the cellulose fibers, preferably 5.20 mmol/g or less, more preferably 3.65 mmol/g or less, and further preferably 3.00 mmol/g or less. Herein, the unit mmol/g indicates the amount of substituents per 1 g (mass) of the cellulose fibers, when the counterions of the anionic groups are hydrogen ions ($H^+$). By setting the amount of anionic groups introduced within the above-described range, it may become easy to perform fibrillation on the fiber raw material, and the stability of the cellulose fibers can be enhanced. Furthermore, by setting the amount of anionic groups introduced within the above-described range, the content of organic onium ions that can be comprised in the cellulose fibers can be set within an appropriate range, and thereby, dispersibility of the cellulose fibers in the organic solvent can be effectively enhanced.

The amount of anionic groups introduced into the cellulose fibers can be measured, for example, by a conductometric titration method. In the measurement according to the conductometric titration method, while an alkali such as a sodium hydroxide aqueous solution is added to the obtained slurry containing the cellulose fibers, a change in the electrical conductivity is obtained, so that the amount of anionic groups introduced can be measured.

Figure 1 is a graph showing the relationship between the amount of NaOH added dropwise to cellulose fibers having phosphoric acid groups and electrical conductivity. The amount of the phosphoric acid groups introduced into the cellulose fibers is measured, for example, as follows. First, a slurry containing cellulose fibers is treated with a strongly acidic ion exchange resin. Before the treatment with the strongly acidic ion exchange resin, the same defibration treatment as the after-mentioned defibration treatment may be performed on the cellulose fibers, as necessary. Subsequently, while adding a sodium hydroxide aqueous solution, a change in the electrical conductivity is observed, and a titration curve as shown in Figure 1 is obtained. As shown in Figure 1, first, the electrical conductivity is rapidly reduced (hereinafter, this region is referred to as a "first region"). Then, the conductivity starts rising slightly (hereinafter, this region is referred to as a "second region"). Then, the increment of the conductivity is further increased (hereinafter, this region is referred to as a "third region"). The boundary point between the second region and the third region is defined as a point at which a change amount in the two differential values of conductivity, namely, an increase in the conductivity (inclination) becomes maximum. Thus, three regions appear in the titration curve. Among them, the amount of the alkali required for the first region among these regions is equal to the amount of a strongly acidic group in the slurry used in the titration, and the amount of the alkali required for the second region is equal to the amount of a weakly acidic group in the slurry used in the titration. When condensation of a phosphoric acid group occurs, the weakly acidic group is apparently lost, so that the amount of the alkali required for the second region is decreased as compared with the amount of the alkali required for the first region. On the other hand, the amount of the strongly acidic group agrees with the amount of the phosphorus atom regardless of the presence or absence of condensation. Hence, the simple term "the amount of the phosphoric acid group introduced (or the amount of the phosphoric acid group)" or "the amount of the substituent introduced (or the amount of the substituent)" refers to the amount of the strongly acidic group. Therefore, the value obtained by dividing the amount (mmol) of the alkali required for the first region in the titration curve as obtained above by the solid content (g) in the slurry as a titration target becomes the amount (mmol/g) of the phosphoric acid groups introduced.

Figure 2 is a graph showing the relationship between the amount of NaOH added dropwise to cellulose fibers having carboxy groups and electrical conductivity. The amount of the carboxy groups introduced into the cellulose fibers is measured, for example, as follows. First, a slurry containing cellulose fibers is treated with a strongly acidic ion exchange resin. Before the treatment with the strongly acidic ion exchange resin, the same defibration treatment as the after-mentioned defibration treatment may be performed on the cellulose fibers, as necessary. Subsequently, while adding a sodium hydroxide aqueous solution, a change in the electrical conductivity is observed, and a titration curve as shown in Figure 2 is obtained. As shown in Figure 2, the titration curve is divided into a first region that corresponds to until an increment (inclination) in the electric conductivity becomes almost constant after the electric conductivity has been reduced, and a second region that corresponds to until an increment (inclination) in the conductivity is increased. It is to be noted that the boundary point between the first region and the second region is defined as a point at which the second-order differential value of the conductivity, namely, the amount of change in the increment (inclination) in the conductivity, becomes maximum. The value obtained by dividing the amount (mmol) of the alkali required for the first region in the titration curve by the solid content (g) in the ultrafine cellulose fiber-containing slurry as a titration target is defined to be the amount (mmol/g) of carboxy groups introduced.

It is to be noted that the aforementioned amount (mmol/g) of carboxy groups introduced indicates the amount of substituents per 1 g (mass) of cellulose fibers when the counterions of the carboxy groups are hydrogen ions ($H^+$) (hereinafter referred to as "the amount of carboxy group (acid type)"). On the other hand, when the counterions of carboxy groups are substituted with any given cations C to achieve charge equivalent, the denominator is converted to the mass of cellulose fibers in which cations C are counterions, so that the amount of carboxy groups possessed by the cellulose fibers in which the cations C are counterions (hereinafter referred to as "the amount of carboxy groups (C type)") can be obtained.

Specifically, the amount of carboxy groups introduced is calculated according to the following equation:

$$\text{Amount of carboxy groups (C type) introduced} = \text{amount of carboxy groups (acid type)} / \{1 + (W-1) \times (\text{amount of carboxy groups (acid type)}) / 1000\}.$$

In the equation, W indicates formula weight per valence of cations C (for example, Na: 23; and Al: 9).

When the titration intervals of a sodium hydroxide aqueous solution are too short in the measurement of the amount of substituents by the titration method, the amount of substituents may become lower than the actual amount. Accordingly, it is desired to titrate the sodium hydroxide aqueous solution with appropriate titration intervals, for example, to titrate a 0.1 N sodium hydroxide aqueous solution in each amount of 50 μL for 30 seconds.

< Step of producing ultrafine cellulose fibers >

< Fiber raw material >

Ultrafine cellulose fibers are produced from a fiber raw material comprising cellulose. Such a fiber raw material comprising cellulose is not particularly limited, and pulp is preferably used from the viewpoint of availability and inexpensiveness. Examples of the pulp may include wood pulp, non-wood pulp, and deinked pulp. Examples of the wood pulp may include, but are not particularly limited to, chemical pulps such as leaf bleached kraft pulp (LBKP), needle bleached kraft pulp (NBKP), sulfite pulp (SP), dissolving pulp (DP), soda pulp (AP), unbleached kraft pulp (UKP), and oxygen bleached kraft pulp (OKP); semichemical pulps such as semi-chemical pulp (SCP) and chemi-ground wood pulp (CGP); and mechanical pulps such as ground pulp (GP) and thermomechanical pulp (TMP, BCTMP). Examples of the non-wood pulp may include, but not particularly limited to, cotton pulps such as cotton linter and cotton lint; and non-wood type pulps such as hemp, wheat straw, and bagasse. An example of a deinked pulp may be, but is not particularly limited to, a deinked pulp using waste paper as a raw material. The pulp of the present embodiment may be used alone as a single type, or in combination of two or more types.

Among the above-listed pulps, for example, wood pulp and deinked pulp are preferable from the viewpoint of easy availability. Moreover, among wood pulps, for example, chemical pulp is more preferable, and kraft pulp and sulfite pulp are further preferable, from the viewpoint that it has a higher cellulose content ratio so as to enhance the yield of ultrafine cellulose fibers upon the defibration treatment, and that decomposition of cellulose in the pulp is mild, so that ultrafine cellulose fibers having a long fiber length with a high aspect ratio can be obtained. It is to be noted that if such ultrafine cellulose fibers having a long fiber length with a high aspect ratio is used, the viscosity tends to become high.

As a fiber raw material comprising cellulose, for example, cellulose comprised in Ascidiacea, or bacterial cellulose generated by acetic acid bacteria can also be utilized. In addition, fibers formed from straight-chain nitrogen-containing polysaccharide polymers such as chitin and chitosan can also be used, instead of a fiber raw material containing cellulose.

< Phosphoric acid group introduction step >

When the ultrafine cellulose fibers have phosphoric acid groups, the step of producing the ultrafine cellulose fibers includes a phosphoric acid introduction step. The phosphoric acid group introduction step is a step of allowing at least one compound selected from compounds capable of reacting with hydroxyl groups possessed by a fiber raw material comprising cellulose and thereby introducing phosphoric acid groups into the fiber raw material (hereinafter also referred to as "Compound A") to act on the fiber raw material comprising cellulose. By this step, phosphoric acid group-introduced fibers can be obtained.

In the phosphoric acid group introduction step according to the present embodiment, the reaction of the fiber raw material comprising cellulose with Compound A may be carried out in the presence of at least one type selected from urea and a derivative thereof (hereinafter also referred to as "Compound B"). Otherwise, the reaction of the fiber raw material comprising cellulose with Compound A may also be carried out in the absence of Compound B.

One example of the method of allowing Compound A to act on the fiber raw material in the presence of Compound B may include a method of mixing Compound A and Compound B into the fiber raw material that is in a dry or wet state, or in a slurry state. Among the fiber raw materials in these states, because of the high uniformity of the reaction, the fiber raw material that is in a dry or wet state is preferably used, and the fiber raw material in a dry state is particularly preferably used. The shape of the fiber raw material is not particularly limited, and for example, a cotton-like or thin sheet-like fiber raw material is preferable. Compound A and Compound B may be added to the fiber raw material by the method of adding Compound A and Compound B that are dissolved in a solvent to form a solution, or are melted by being heated to a melting point or higher. Among these, because of the high uniformity of the reaction, the compounds

are preferably added to the fiber raw material, in the form of a solution obtained by dissolution thereof in a solvent, or in particular, in the form of an aqueous solution. Moreover, Compound A and Compound B may be simultaneously added, or may also be added, separately. Alternatively, Compound A and Compound B may be added in the form of a mixture thereof. The method of adding Compound A and Compound B is not particularly limited, and in a case where Compound A and Compound B are in the form of a solution, the fiber raw material may be immersed in the solution for liquid absorption, and may be then removed therefrom, or the solution may also be added dropwise onto the fiber raw material. Otherwise, Compound A and Compound B in necessary amounts may be added to the fiber raw material, or Compound A and Compound B in excessive amounts may be added to the fiber raw material and then, may be squeezed or filtrated to remove redundant Compound A and Compound B.

Examples of Compound A used in the present embodiment may include compounds having a phosphorus atom and being capable of forming an ester bond with cellulose. Specific examples of Compound A may include phosphoric acid or a salt thereof, phosphorus acid or a salt thereof, dehydrated condensed phosphoric acid or a salt thereof, and phosphoric anhydride (diphosphorus pentoxide), but are not particularly limited thereto. As such phosphoric acid, those having various purities can be used, and for example, 100% phosphoric acid (orthophosphoric acid) or 85% phosphoric acid can be used. Phosphorus acid may be, for example, 99% phosphorus acid (phosphonic acid). Dehydrated condensed phosphoric acid is phosphoric acid that is condensed by two or more molecules according to a dehydration reaction, and examples of such dehydrated condensed phosphoric acid may include pyrophosphoric acid and polyphosphoric acid. Examples of the phosphate, phosphite, and salts of dehydrated condensed phosphoric acid may include lithium salts, sodium salts, potassium salts, and ammonium salts of phosphoric acid, phosphorus acid or dehydrated condensed phosphoric acid, and these salts may have various neutralization degrees. Among these, from the viewpoints of high efficiency in introduction of the phosphoric acid groups, an improving tendency of the defibration efficiency in a defibration step described below, low costs, and industrial applicability, phosphoric acid, sodium salts of phosphoric acid, potassium salts of phosphoric acid, or ammonium salts of phosphoric acid are preferable, and phosphoric acid, sodium dihydrogen phosphate, disodium hydrogen phosphate, or ammonium dihydrogen phosphate is more preferable.

The amount of Compound A added to the fiber raw material is not particularly limited, and for example, if the amount of the Compound A added is converted to a phosphorus atomic weight, the amount of phosphorus atoms added with respect to the fiber raw material (absolute dry mass) is preferably 0.5% by mass or more and 100% by mass or less, more preferably 1% by mass or more and 50% by mass or less, and further preferably 2% by mass or more and 30% by mass or less. By setting the amount of phosphorus atoms added to the fiber raw material within the above-described range, the yield of the ultrafine cellulose fibers can be further improved. On the other hand, by setting the amount of phosphorus atoms added to the fiber raw material to the above-described upper limit value or less, the balance between the effect of improving the yield and costs can be kept.

Compound B used in the present embodiment is at least one type selected from urea and a derivative thereof, as described above. Examples of Compound B may include urea, biuret, 1-phenyl urea, 1-benzyl urea, 1-methyl urea, and 1-ethyl urea. From the viewpoint of the improvement of the uniformity of the reaction, Compound B is preferably used in the form of an aqueous solution. Moreover, from the viewpoint of the further improvement of the uniformity of the reaction, an aqueous solution, in which both Compound A and Compound B are dissolved, is preferably used.

The amount of Compound B added to the fiber raw material (absolute dry mass) is not particularly limited, and for example, it is preferably 1% by mass or more and 500% by mass or less, more preferably 10% by mass or more and 400% by mass or less, and further preferably 100% by mass or more and 350% by mass or less.

In the reaction of the fiber raw material comprising cellulose with Compound A, for example, amides or amines, as well as Compound B, may be comprised in the reaction system. Examples of the amides may include formamide, dimethylformamide, acetamide, and dimethylacetamide. Examples of the amines may include methylamine, ethylamine, trimethylamine, triethylamine, monoethanolamine, diethanolamine, triethanolamine, pyridine, ethylenediamine, and hexamethylenediamine. Among these, particularly, triethylamine is known to work as a favorable reaction catalyst.

In the phosphoric acid group introduction step, after Compound A, etc. is added or mixed into the fiber raw material, a heat treatment is preferable performed on the fiber raw material. For the temperature of such a heat treatment, it is preferable to select a temperature that allows an efficient introduction of phosphoric acid groups, while suppressing the thermal decomposition or hydrolysis reaction of fibers. For example, the heat treatment temperature is preferably 50°C or higher and 300°C or lower, more preferably 100°C or higher and 250°C or lower, and further preferably 130°C or higher and 200°C or lower. In addition, apparatuses having various heating media can be utilized in the heat treatment, and examples of such an apparatus may include a stirring dryer, a rotary dryer, a disk dryer, a roll-type heater, a plate-type heater, a fluidized bed dryer, an airborne dryer, a vacuum dryer, an infrared heating device, a far-infrared heating device, and a microwave heating device.

In the heat treatment according to the present embodiment, a method comprising adding Compound A to a thin sheet-like fiber raw material by impregnation or the like, and then heating the fiber raw material, or a method comprising heating a fiber raw material, while kneading or stirring the fiber raw material and Compound A using a kneader or the like, can be adopted. Thereby, the unevenness in the concentration of the Compound A in the fiber raw material

can be suppressed, and phosphoric acid groups can be more uniformly introduced into the surface of cellulose fibers comprised in the fiber raw material. This is considered because, when water molecules move to the surface of the fiber raw material as drying advances, Compound A dissolved therein is attracted to the water molecules due to surface tension and as a result, Compound A also moves to the surface of the fiber raw material (specifically, the unevenness in the concentration of the Compound A occurs), and because such a phenomenon can be suppressed by adopting the aforementioned method.

As a heating device used for the heat treatment, for example, a device capable of always discharging moisture retained by slurry or moisture generated by the dehydration condensation (phosphoric acid esterification) reaction of Compound A with hydroxyl groups, etc. comprised in cellulose or the like in the fiber raw material, to the outside of the device system, is preferable. Such a heating device may be, for example, a ventilation-type oven. By always discharging moisture from the device system, in addition to being able to suppress a hydrolysis reaction of phosphoric acid ester bonds, which is a reverse reaction of the phosphoric acid esterification, the acid hydrolysis of sugar chains in the fibers may also be suppressed. Thus, it becomes possible to obtain ultrafine cellulose fibers with a high axial ratio.

The time for the heat treatment is preferably 1 second or more and 300 minutes or less, more preferably 1 second or more and 1000 seconds or less, and further preferably 10 seconds or more and 800 seconds or less, for example, after moisture has been substantially removed from the fiber raw material. In the present embodiment, by setting the heating temperature and the heating time within an appropriate range, the amount of phosphoric acid groups introduced can be set within a preferred range.

The phosphoric acid group introduction step may be performed at least once, but may also be repeated two or more times. By performing the phosphoric acid group introduction step two or more times, many phosphoric acid groups can be introduced into the fiber raw material. In the present embodiment, as one example of a preferred aspect, the phosphoric acid group introduction step is performed two times.

The amount of phosphoric acid groups introduced into the fiber raw material is, for example, per 1 g (mass) of the ultrafine cellulose fibers, preferably 0.10 mmol/g or more, more preferably 0.20 mmol/g or more, further preferably 0.50 mmol/g or more, and particularly preferably 1.00 mmol/g or more. On the other hand, the amount of phosphoric acid groups introduced into the fiber raw material is, for example, per 1 g (mass) of the ultrafine cellulose fibers, preferably 5.20 mmol/g or less, more preferably 3.65 mmol/g or less, and further preferably 3.00 mmol/g or less. By setting the amount of phosphoric acid groups introduced within the above-described range, it may become easy to perform fibrillation on the fiber raw material, and the stability of the ultrafine cellulose fibers can be enhanced. Furthermore, by setting the amount of phosphoric acid groups introduced within the above-described range, the content of organic onium ions that can be comprised in the cellulose fibers can be set within an appropriate range, and thereby, dispersibility of the cellulose fibers in the organic solvent can be effectively enhanced.

< Carboxy group introduction step >

When the ultrafine cellulose fibers have carboxy groups, the step of producing the ultrafine cellulose fibers includes a carboxy group introduction step. The carboxy group introduction step is carried out by performing ozonation, oxidation according to the Fenton method, or an oxidation treatment such as a TEMPO oxidation treatment, or by treating such a fiber raw material comprising cellulose with a compound having a carboxylic acid-derived group or a derivative thereof, or with an acid anhydride of the compound having a carboxylic acid-derived group or a derivative thereof.

Examples of the compound having a carboxylic acid-derived group may include, but are not particularly limited to, dicarboxylic acid compounds such as maleic acid, succinic acid, phthalic acid, fumaric acid, glutaric acid, adipic acid or itaconic acid, and tricarboxylic acid compounds such as citric acid or aconitic acid. In addition, examples of the derivative of the compound having a carboxylic acid-derived group may include, but are not particularly limited to, an imidized product of the acid anhydride of the compound having a carboxy group and a derivative of the acid anhydride of the compound having a carboxy group. Examples of the imidized product of the acid anhydride of the compound having a carboxy group may include, but are not particularly limited to, imidized products of dicarboxylic acid compounds, such as maleimide, succinimide or phthalimide.

Examples of the acid anhydride of the compound having a carboxylic acid-derived group may include, but are not particularly limited to, acid anhydrides of dicarboxylic acid compounds, such as maleic anhydride, succinic anhydride, phthalic anhydride, glutaric anhydride, adipic anhydride, or itaconic anhydride. In addition, examples of the derivative of the acid anhydride of the compound having a carboxylic acid-derived group may include, but are not particularly limited to, acid anhydrides of the compounds having a carboxy group, in which at least some hydrogen atoms are substituted with substituents such as alkyl groups or phenyl groups, such as dimethylmaleic anhydride, diethylmaleic anhydride, or diphenylmaleic anhydride.

In the case of performing a TEMPO oxidation treatment in the carboxy group introduction step, the treatment is preferably carried out, for example, under conditions of pH 6 or more and pH 8 or less. Such a treatment is also referred to as a neutral TEMPO oxidation treatment. The neutral TEMPO oxidation treatment can be carried out, for

example, by adding a pulp used as a fiber raw material, nitroxy radical used as a catalyst, such as TEMPO (2,2,6,6-tetramethylpiperidin-1-oxyl), and sodium hypochlorite used as a sacrifice reagent to a sodium phosphate buffer (pH = 6.8). Further, by allowing sodium chlorite to coexist in the reaction system, aldehyde generated in the oxidation process can be efficiently oxidized to a carboxy group.

Moreover, the TEMPO oxidation treatment may be carried out under conditions of pH 10 or more and pH 11 or less. Such a treatment is also referred to as an "alkaline TEMPO oxidation treatment." The alkaline TEMPO oxidation treatment can be carried out, for example, by adding nitroxy radicals such as TEMPO used as a catalyst, sodium bromide used as a co-catalyst, and sodium hypochlorite used as an oxidizer, to pulp as a fiber raw material.

The amount of carboxy groups introduced into the fiber raw material is different depending on the types of the substituents. When carboxy groups are introduced, for example, according to TEMPO oxidation, the amount of carboxy groups introduced is, per 1 g (mass) of the ultrafine cellulose fibers, preferably 0.10 mmol/g or more, more preferably 0.20 mmol/g or more, further preferably 0.50 mmol/g or more, and particularly preferably 0.90 mmol/g or more. On the other hand, the amount of carboxy groups introduced is, per 1 g (mass) of the ultrafine cellulose fibers, preferably 2.50 mmol/g or less, more preferably 2.20 mmol/g or less, and further preferably 2.00 mmol/g or less. Otherwise, when the substituents are carboxymethyl groups, the amount of carboxy groups introduced may be, per 1 g (mass) of the ultrafine cellulose fibers, 5.8 mmol/g or less. Furthermore, by setting the amount of carboxy groups introduced within the above-described range, the content of organic onium ions that can be comprised in the cellulose fibers can be set within an appropriate range, and thereby, dispersibility of the cellulose fibers in the organic solvent can be effectively enhanced.

< Washing step >

In the method for producing ultrafine cellulose fibers according to the present embodiment, a washing step may be performed on the anionic group-introduced fibers, as necessary. The washing step is carried out by washing the anionic group-introduced fibers, for example, with water or an organic solvent. In addition, the washing step may be performed after each step as described below, and the number of washing operations performed in each washing step is not particularly limited.

< Alkali treatment step >

When the ultrafine cellulose fibers are produced, an alkali treatment may be performed on the fiber raw material between the anionic group introduction step and a defibration treatment step as described below. The method of the alkali treatment is not particularly limited. For example, a method of immersing the anionic group-introduced fibers in an alkaline solution may be applied.

The alkali compound contained in the alkaline solution is not particularly limited, and it may be an inorganic alkaline compound or an organic alkali compound. In the present embodiment, because of high versatility, for example, sodium hydroxide or potassium hydroxide is preferably used as an alkaline compound. In addition, the solvent contained in the alkaline solution may be either water or an organic solvent. Among others, the solvent contained in the alkaline solution is preferably water, or a polar solvent including a polar organic solvent such as alcohol, and is more preferably an aqueous solvent containing at least water. As an alkaline solution, for example, a sodium hydroxide aqueous solution or a potassium hydroxide aqueous solution is preferable, because of high versatility.

The temperature of the alkali solution in the alkali treatment step is not particularly limited, and for example, it is preferably 5°C or higher and 80°C or lower, and more preferably 10°C or higher and 60°C or lower. The time for immersion of the anionic group-introduced fibers in the alkali solution in the alkali treatment step is not particularly limited, and for example, it is preferably 5 minutes or more and 30 minutes or less, and more preferably 10 minutes or more and 20 minutes or less. The amount of the alkali solution used in the alkali treatment is not particularly limited, and for example, it is preferably 100% by mass or more and 100000% by mass or less, and more preferably 1000% by mass and 10000% by mass or less, with respect to the absolute dry mass of the anionic group-introduced fibers.

In order to reduce the amount of the alkaline solution used in the alkali treatment step, the anionic group-introduced fibers may be washed with water or an organic solvent after the anionic group introduction step and before the alkali treatment step. After the alkali treatment step and before the defibration step, the alkali-treated anionic group-introduced fibers are preferably washed with water or an organic solvent, from the viewpoint of the improvement of the handling ability.

< Acid treatment step >

When ultrafine cellulose fibers are produced, an acid treatment may be performed on the fiber raw material between the step of introducing anionic groups into the fiber raw material and the after-mentioned defibration treatment step. For example, a anionic group introduction step, an acid treatment, an alkali treatment, and a defibration treatment may be performed in this order.

Such an acid treatment method is not particularly limited, and for example, a method of immersing the fiber

raw material in an acid solution containing an acid may be applied. The concentration of the used acid solution is not particularly limited, and for example, it is preferably 10% by mass or less, and more preferably 5% by mass or less. In addition, the pH of the used acid solution is not particularly limited, and for example, it is preferably a pH value of 0 or more and 4 or less, and more preferably a pH value of 1 or more and 3 or less. Examples of the acid contained in the acid solution that can be used herein may include inorganic acid, sulfonic acid, and carboxylic acid. Examples of the inorganic acid may include sulfuric acid, nitric acid, hydrochloric acid, hydrobromic acid, hydroiodic acid, hypochlorous acid, chlorous acid, chloric acid, perchloric acid, phosphoric acid, and boric acid. Examples of the sulfonic acid may include methanesulfonic acid, ethanesulfonic acid, benzenesulfonic acid, p-toluenesulfonic acid, and trifluoromethanesulfonic acid. Examples of the carboxylic acid may include formic acid, acetic acid, citric acid, gluconic acid, lactic acid, oxalic acid, and tartaric acid. Among these acids, it is particularly preferable to use hydrochloric acid or sulfuric acid.

The temperature of the acid solution used in the acid treatment is not particularly limited, and for example, it is preferably 5°C or higher and 100°C or lower, and more preferably 20°C or higher and 90°C or lower. The time for immersion of the fiber raw material in the acid solution in the acid treatment is not particularly limited, and for example, it is preferably 5 minutes or more and 120 minutes or less, and more preferably 10 minutes or more and 60 minutes or less. The amount of the acid solution used in the acid treatment is not particularly limited, and for example, it is preferably 100% by mass or more and 100000% by mass or less, and more preferably 1000% by mass or more and 10000% by mass or less, with respect to the absolute dry mass of the fiber raw material.

< Defibration treatment >

By performing a defibration treatment on the anionic group-introduced fibers in a defibration treatment step, ultrafine cellulose fibers are obtained. In the defibration treatment step, for example, a defibration treatment apparatus can be used. Such a defibration treatment apparatus is not particularly limited, and for example, a high-speed defibrator, a grinder (stone mill-type crusher), a high-pressure homogenizer, an ultrahigh-pressure homogenizer, a high-pressure collision-type crusher, a ball mill, a bead mill, a disc-type refiner, a conical refiner, a twin-screw kneader, an oscillation mill, a homomixer under high-speed rotation, an ultrasonic disperser, a beater or the like can be used. Among the above-described defibration treatment apparatuses, it is more preferable to use a high-speed defibrator, a high-pressure homogenizer, and an ultrahigh-pressure homogenizer, which are less affected by milling media, and are less likely to be contaminated.

In the defibration treatment step, for example, the anionic group-introduced fibers are preferably diluted with a dispersion medium to form a slurry. As a dispersion medium, water, and one type or two or more types selected from organic solvents such as polar organic solvents can be used. The polar organic solvent is not particularly limited, and for example, alcohols, polyhydric alcohols, ketones, ethers, esters, aprotic polar solvents, etc. are preferable. Examples of the alcohols may include methanol, ethanol, isopropanol, n-butanol, and isobutyl alcohol. Examples of the polyhydric alcohols may include ethylene glycol, propylene glycol, and glycerin. Examples of the ketones may include acetone and methyl ethyl ketone (MEK). Examples of the ethers may include diethyl ether, tetrahydrofuran, ethylene glycol monomethyl ether, ethylene glycol monoethyl ether, ethylene glycol mono n-butyl ether, and propylene glycol monomethyl ether. Examples of the esters may include ethyl acetate and butyl acetate. Examples of the aprotic polar solvents may include dimethyl sulfoxide (DMSO), dimethylformamide (DMF), dimethylacetamide (DMAc), and N-methyl-2-pyrrolidinone (NMP).

The solid concentration of the ultrafine cellulose fibers upon the defibration treatment can be determined, as appropriate. In addition, in a slurry obtained by dispersing the anionic group-introduced fibers in a dispersion medium, solids other than the anionic group-introduced fibers, such as hydrogen-binding urea, may be comprised.

(Organic onium ions)

The cellulose fiber-containing composition of the present invention comprises organic onium ions as counterions of the anionic groups possessed by the ultrafine cellulose fibers. In the present invention, at least some organic onium ions are present as counterions of the ultrafine cellulose fibers, but free organic onium ions may be present in the cellulose fiber-containing composition. It is to be noted that the organic onium ions do not form a covalent bond with cellulose fibers.

The organic onium ions preferably satisfy at least one condition selected from the following (a) and (b):

(a) containing a hydrocarbon group having 5 or more carbon atoms; and
(b) having a total carbon number of 17 or more.

That is to say, the ultrafine cellulose fibers preferably comprise, as counterions of the anionic groups, at least one selected from organic onium ions containing a hydrocarbon group having 5 or more carbon atoms and organic

onium ions having a total carbon number of 17 or more. By using the organic onium ions satisfying at least one condition selected from the above (a) and (b), dispersibility of the ultrafine cellulose fibers in the organic solvent can be effectively enhanced.

The hydrocarbon group having 5 or more carbon atoms is preferably an alkyl group having 5 or more carbon atoms or an alkylene group having 5 or more carbon atoms, more preferably an alkyl group having 6 or more carbon atoms or an alkylene group having 6 or more carbon atoms, further preferably an alkyl group having 7 or more carbon atoms or an alkylene group having 7 or more carbon atoms, and particularly preferably an alkyl group having 10 or more carbon atoms or an alkylene group having 10 or more carbon atoms. Among others, the organic onium ions preferably have an alkyl group having 5 or more carbon atoms, and more preferably contain an alkyl group having 5 or more carbon atoms and have a total carbon number of 17 or more.

The organic onium ion is preferably represented by the following formula (A):

[Formula 2]

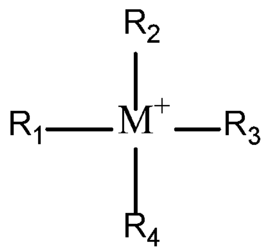

Formula (A)

In the above formula (A), M represents a nitrogen atom or a phosphorus atom, and $R_1$ to $R_4$ each independently represent a hydrogen atom or an organic group. However, preferably, at least one of $R_1$ to $R_4$ represents an organic group containing 5 or more carbon atoms, or the total number of carbon atoms contained in $R_1$ to $R_4$ is 17 or more.

Among others, M is preferably a nitrogen atom. Specifically, the organic onium ion is preferably an organic ammonium ion. Moreover, preferably, at least one of $R_1$ to $R_4$ is an alkyl group containing 5 or more carbon atoms, and the total number of carbon atoms contained in $R_1$ to $R_4$ is 17 or more.

Examples of such an organic onium ion may include lauryltrimethyl ammonium, cetyltrimethyl ammonium, stearyltrimethyl ammonium, octyldimethylethyl ammonium, lauryldimethylethyl ammonium, didecyldimethyl ammonium, lauryldimethylbenzyl ammonium, tributylbenzyl ammonium, methyltri-n-ocyl ammonium, hexyl ammonium, n-octyl ammonium, dodecyl ammonium, tetradecyl ammonium, hexadecyl ammonium, stearyl ammonium, N,N-dimethyldodecyl ammonium, N,N-dimethyltetradecyl ammonium, N,N-dimethylhexadecyl ammonium, N,N-dimethyl-n-octadecyl ammonium, dihexyl ammonium, di(2-ethylhexyl) ammonium, di-n-octyl ammonium, didecyl ammonium, didodecyl ammonium, didecylmethyl ammonium, N,N-didodecylmethyl ammonium, polyoxyethylene dodecyl ammonium, alkyldimethylbenzyl ammonium, di-n-alkyldimethyl ammonium, behenyltrimethyl ammonium, tetraphenyl phosphonium, tetraoctyl phosphonium, acetonyltriphenyl phosphonium, allyltriphenyl phosphonium, amyltriphenyl phosphonium, benzyltriphenyl phosphonium, ethyltriphenyl phosphonium, diphenylpropyl phosphonium, triphenyl phosphonium, tricyclohexyl phosphonium, and tri-n-octyl phosphonium. Besides, the alkyl group in alkyldimethylbenzyl ammonium or di-n-alkyldimethyl ammonium may be, for example, a straight chain alkyl group having 8 or more and 18 or less carbon atoms.

Besides, as shown in the formula (A), the center element of the organic onium ion binds to a total of 4 groups or hydrogen atoms. When the aforementioned organic onium ion, the center element of which binds to less than 4 groups, hydrogen atom(s) bind to the rest(s), so as to form an organic onium ion(s). For example, in the case of N,N-didodecylmethyl ammonium, it can be determined from the name thereof that two dodecyl groups and one methyl group bind thereto. In this case, a hydrogen atom binds to the remaining one to form an organic onium ion.

When the organic onium comprises O atoms, the mass ratio of C atoms to the O atoms (C/O ratio) is preferably large, and for example, C/O > 5 is preferable. By setting the C/O ratio at greater than 5, an ultrafine cellulose fiber concentrate can be easily obtained when the organic onium ions or compounds that form the organic onium ions as a result of neutralization are added to the ultrafine cellulose fiber-containing slurry.

The molecular weight of the organic onium ions is preferably 2000 or less, and more preferably 1800 or less. By setting the molecular weight of the organic onium ions within the above-described range, the handling ability of the ultrafine cellulose fibers can be enhanced. In addition, by setting the molecular weight of the organic onium ions within the above-described range, a decrease in the content rate of the cellulose fibers in the cellulose fiber-containing composition can be suppressed.

The content of the organic onium ions is preferably 5.0% by mass or more, more preferably 10% by mass or more, and further preferably 15% by mass or more, with respect to the total mass of the cellulose fiber-containing

composition. On the other hand, the content of the organic onium ions is preferably 80% by mass or less, and more preferably 70% by mass or less, with respect to the total mass of the cellulose fiber-containing composition.

In addition, the content of the organic onium ions in the cellulose fiber-containing composition is preferably an amount that is equimolar to or is 2 times the molar amount of the anionic groups contained in the ultrafine cellulose fibers, but is not particularly limited thereto. Besides, the content of the organic onium ions can be measured by tracking atoms typically contained in the organic onium ions. Specifically, when the organic onium ions are ammonium ions, the amount of nitrogen atoms is measured, and when the organic onium ions are phosphonium ions, the amount of phosphorus atoms is measured. When the ultrafine cellulose fibers comprise nitrogen atoms or phosphorus atoms, as well as the organic onium ions, a method of extracting only the organic onium ions, for example, an extraction operation using an acid may be carried out, and thereafter, the amount of the atoms of interest may be measured.

(Metal ions)

The cellulose fiber-containing composition of the present invention comprises metal ions. The metal ions are preferably metal ions possessed by the ultrafine cellulose fibers as counterions of the anionic groups, before the mixing of the organic onium ions with an ultrafine cellulose fiber-containing slurry in the step of obtaining a concentrate of ultrafine cellulose fibers, as mentioned later, but the metal ions are not limited thereto. The metal ions may also be added into the cellulose fiber-containing composition, separately.

When the solid contained in the cellulose fiber-containing composition is converted to an absolute dry solid, the content of the metal ions in the absolute dry solid may be 80 ppm or more, and it is preferably 90 ppm or more, and more preferably 100 ppm or more. On the other hand, the content of the metal ions in the absolute dry solid may be 700 ppm or less, and it is preferably 600 ppm or less, and more preferably 500 ppm or less. By setting the content of the metal ions in the absolute dry solid within the above-described range, when the ultrafine cellulose fiber-containing composition is dispersed in an organic solvent, the viscosity and transparency of the organic solvent slurry can be enhanced. Furthermore, by setting the content of the metal ions in the absolute dry solid within the above-described range, the content of chloride ions or sulfate ions in the cellulose fiber-containing composition can also be suppressed.

When the solid contained in the cellulose fiber-containing composition is converted to an absolute dry solid, the cellulose fiber-containing composition is dried under conditions of 105°C until it becomes absolutely dried (for example, for 3 hours or more). When the content of the metal ions in this absolute dry solid is measured, 5.0 mL of nitric acid is added to 0.1 g of the absolute dry solid, and wet degradation is then carried out using a wet degradation apparatus. Thereafter, the amount of the metal ions is measured using an ICP emission spectrophotometric analyzer. It is to be noted that MARS5 manufactured by CEM can be used, for example, as a wet degradation apparatus, and that CIROS120 manufactured by AMETEK can be used, for example, as an ICP emission spectrophotometric analyzer.

The metal ions are not particularly limited, and are preferably at least one type selected from alkali metal ions and alkaline earth metal ions. Specific examples of the metal ions may include sodium ions, potassium ions, magnesium ions, and calcium ions. Among these, the metal ions are preferably sodium ions.

(Organic solvent)

The cellulose fiber-containing composition of the present invention may further comprise an organic solvent. Besides, when the cellulose fiber-containing composition is converted to a liquid because it comprises an organic solvent, the cellulose fiber-containing composition is referred to as a "liquid composition," as described later.

The organic solvent is not particularly limited, and examples of the organic solvent may include methanol, ethanol, n-propyl alcohol, isopropyl alcohol (IPA), 1-butanol, m-cresol, glycerin, acetic acid, pyridine, tetrahydrofuran (THF), acetone, methyl ethyl ketone (MEK), ethyl acetate, aniline, N-methyl-2-pyrrolidone (NMP), dimethyl sulfoxide (DMSO), N,N-dimethylformamide (DMF), hexane, cyclohexane, benzene, toluene, p-xylene, diethyl ether, and chloroform. Among these, N-methyl-2-pyrrolidone (NMP), dimethyl sulfoxide (DMSO), methyl ethyl ketone (MEK), toluene, and methanol are preferably used.

The dielectric constant of the organic solvent at 25°C is preferably 60 or less, and more preferably 50 or less. Since the ultrafine cellulose fibers of the present invention can exhibit excellent dispersibility even in an organic solvent having a low dielectric constant, the dielectric constant of the organic solvent at 25°C may also be 45 or less, 40 or less, or 35 or less.

The $\delta p$ of the Hansen solubility parameter (HSP value) of the organic solvent is preferably 5 $MPa^{1/2}$ or more and 20 $MPa^{1/2}$ or less, more preferably 10 $MPa^{1/2}$ or more and 19 $MPa^{1/2}$ or less, and further preferably 12 $MPa^{1/2}$ or more and 18 $MPa^{1/2}$ or less. In addition, the 8h is preferably 5 $MPa^{1/2}$ or more and 40 $MPa^{1/2}$ or less, more preferably 5 $MPa^{1/2}$ or more and 30 $MPa^{1/2}$ or less, and further preferably 5 $MPa^{1/2}$ or more and 20 $MPa^{1/2}$ or less. The organic solvent, which simultaneously satisfies the $\delta p$ that is in the range of 0 $MPa^{1/2}$ or more and 4 $MPa^{1/2}$ or less and the $\delta h$ that is the range of 0 $MPa^{1/2}$ or more and 6 $MPa^{1/2}$ or less, is also preferable.

The content of the organic solvent in the cellulose fiber-containing composition is preferably 40% by mass or less, more preferably 30% by mass or less, and further preferably 20% by mass or less, with respect to the total mass of the solid contained in the cellulose fiber-containing composition.

(Resin)

The cellulose fiber-containing composition of the present invention may further comprise a resin. The type of such a resin is not particularly limited, and examples of the resin may include a thermoplastic resin and a thermosetting resin.

Examples of the resin may include a polyolefin resin, an acrylic resin, a polycarbonate resin, a polyester resin, a polyamide resin, a silicone resin, a fluorine resin, a chlorine resin, an epoxy resin, a melamine resin, a phenolic resin, a polyurethane resin, a diallyl phthalate resin, an alcoholic resin, a cellulose derivative, and precursors of these resins. Besides, examples of the cellulose derivative may include carboxymethyl cellulose, methyl cellulose, and hydroxyethyl cellulose.

The ultrafine cellulose fiber-containing composition of the present invention may comprise a resin precursor. The type of such a resin precursor is not particularly limited, and examples thereof may include a thermoplastic resin precursor and a thermosetting resin precursor. The thermoplastic resin precursor means a monomer or an oligomer having a relatively low molecular weight, which is used to produce a thermoplastic resin. The thermosetting resin precursor means a monomer or an oligomer having a relatively low molecular weight, which causes a polymerization reaction or a crosslinking reaction by the action of light, heat or a hardening agent, and as a result, may form a thermosetting resin.

The cellulose fiber-containing composition of the present invention may further comprise a water-soluble polymer as a resin that is different from the aforementioned resin type. Examples of the water-soluble polymer may include synthetic water-soluble polymers (e.g., a carboxy vinyl polymer, polyvinyl alcohol, an alkyl methacrylate-acrylic acid copolymer, polyvinyl pyrrolidone, sodium polyacrylate, polyethylene glycol, diethylene glycol, triethylene glycol, propylene glycol, dipropylene glycol, polypropylene glycol, isoprene glycol, hexylene glycol, 1,3-butylene glycol, polyacrylamide, etc.); thickening polysaccharides (e.g., xanthan gum, guar gum, tamarind gum, carrageenan, locust bean gum, quince seed, alginic acid, pullulan, carrageenan, pectin, etc.); starches, such as cationized starch, raw starch, oxidized starch, etherified starch, esterified starch, and amylose; glycerins, such as glycerin, diglycerin, and polyglycerin; and hyaluronic acid and a metal salt of hyaluronic acid.

The content of the resin in the cellulose fiber-containing composition is preferably 40% by mass or less, more preferably 30% by mass or less, and further preferably 20% by mass or less, with respect to the total mass of the solid contained in the cellulose fiber-containing composition.

(Optional components)

The cellulose fiber-containing composition may further comprise other optional components. When the cellulose fiber-containing composition comprises other optional components, such optional components may be added and/or mixed into the cellulose fiber-containing composition obtained after concentration, or may also be added into a slurry before the concentration.

The optional component may be, for example, a moisture absorbent. Examples of the moisture absorbent include silica gel, zeolite, alumina, carboxymethylcellulose, poly(vinyl alcohol), water-soluble cellulose acetate, polyethylene glycol, sepiolite, calcium oxide, diatomaceous earth, activated carbon, activated clay, white carbon, calcium chloride, magnesium chloride, potassium acetate, disodium phosphate, sodium citrate, and a water-absorbing polymer.

Further, examples of the optional components may include surfactants, organic ions, coupling agents, inorganic layered compounds, inorganic compounds, leveling agents, antiseptics, antifoaming agents, organic particles, lubricants, antistatic agents, ultraviolet protectors, dyes, pigments, stabilizers, magnetic powders, orientation promoters, plasticizers, dispersing agents, and crosslinkers.

The content of such optional components in the cellulose fiber-containing composition is preferably 40% by mass or less, more preferably 30% by mass or less, and further preferably 20% by mass or less, with respect to the total mass of the solid contained in the cellulose fiber-containing composition.

(Method for producing cellulose fiber-containing composition)

The step of producing the cellulose fiber-containing composition includes a step of adding organic onium ions or compounds that form the organic onium ions as a result of neutralization to the ultrafine cellulose fiber-containing slurry. Specifically, the aforementioned onium ions or compounds that form the organic onium ions as a result of neutralization are added to the ultrafine cellulose fiber-containing slurry obtained by the aforementioned defibration treatment. In this step, the organic onium ions are preferably added in the form of a solution containing the organic onium ions,

and are more preferably added in the form of an aqueous solution containing the organic onium ions.

The aqueous solution containing the organic onium ions generally comprises the organic onium ions and counterions (anions). Upon preparation of the aqueous solution of the organic onium ions, when the organic onium ions and the corresponding counterions have already form salts, they may be directly dissolved in water. Upon preparation of the aqueous solution of the organic onium ions, when the organic onium ions and the corresponding counterions have already form salts, they are preferably dissolved in water or hot water. At this time, the solvent for dissolution of the organic onium ions and the corresponding counterions preferably substantially comprises no organic solvent. In addition, when organic onium ion salts are hardly soluble in water at normal temperature, the organic onium ion salts are preferably dissolved in hot water. The temperature of the hot water is not particularly limited, as long as it is a temperature at which salts are dissolved in the hot water. The temperature of the hot water is preferably 70°C or higher, and more preferably 80°C or higher. On the other hand, it is preferably 100°C or lower. In the present invention, by adjusting the organic onium ions under the above-described conditions, the content of the metal ions in the cellulose fiber-containing composition can be easily controlled within a predetermined range.

Moreover, there may also be a case where some organic onium ions are generated only after neutralization with an acid, as in the case of dodecylamine, for example. In this case, the organic onium ions are obtained by a reaction of a compound forming the organic onium ions as a result of neutralization, with an acid. In this case, examples of the acid used in neutralization may include: inorganic acids such as hydrochloric acid, sulfuric acid and nitric acid; and organic acids such as lactic acid, acetic acid, formic acid and oxalic acid. In the present invention, when the organic onium ions are generated only after neutralization with an acid, the content of the metal ions in the cellulose fiber-containing composition can be easily controlled within a predetermined range by performing neutralization.

The step of adding organic onium ions or compounds that form the organic onium ions as a result of neutralization to the ultrafine cellulose fiber-containing slurry preferably further includes a stirring step. In the stirring step, the liquid temperature of the ultrafine cellulose fiber-containing slurry to which the organic onium ions have been added (hereinafter also referred to as a "stirring treatment temperature") is preferably 60°C or lower, more preferably 50°C or lower, further preferably 40°C or lower, and particularly preferably 30°C or lower. In the present invention, by setting the stirring treatment temperature within the above-described range, the mobility of the organic onium ions can be controlled within an appropriate range, and thereby, the exchange of counterions in the ultrafine cellulose fibers sufficiently progresses, so that the content of the metal ions in the cellulose fiber-containing composition can be easily controlled within a predetermined range. Moreover, by setting the stirring treatment temperature within the above-described range, the concentration of chloride ions or sulfate ions in the cellulose fiber-containing composition can be easily controlled within a preferred range.

Hence, in the present invention, by adjusting the reaction temperature and reaction conditions applied in the reaction of the organic onium ions with the ultrafine cellulose fibers, or by adjusting the conditions for the pre-treatment of the organic onium ions or the counterions of the ultrafine cellulose fibers before the reaction with organic onium, the amount of the metal ions comprised in the cellulose fiber-containing composition can be easily controlled within an appropriate range. Specifically, by moderately promoting the reaction of the organic onium ions with the ultrafine cellulose fibers, the amount of the metal ions comprised in the obtained cellulose fiber-containing composition can be adjusted within a desired range.

The additive amount of the organic onium ions is preferably 2% by mass or more, more preferably 10% by mass or more, further preferably 50% by mass or more, and particularly preferably 100% by mass or more, with respect to the total mass of the ultrafine cellulose fibers. On the other hand, the additive amount of the organic onium ions is preferably 1000% by mass or less with respect to the total mass of the ultrafine cellulose fibers.

Moreover, the number of moles of the organic onium ions to be added is preferably 0.2 times or more, more preferably 1.0 time or more, and further preferably 2.0 times or more the value obtained by multiplying the amount of the anionic groups comprised in the ultrafine cellulose fibers (the number of moles) by the valence. On the other hand, the number of moles of the organic onium ions to be added is preferably 10 times or less the value obtained by multiplying the amount of the anionic groups comprised in the ultrafine cellulose fibers (the number of moles) by the valence.

When the organic onium ions are added to the ultrafine cellulose fiber-containing slurry, followed by stirring, an aggregate is generated in the ultrafine cellulose fiber-containing slurry. This aggregate is generated as a result of aggregation of the ultrafine cellulose fibers having the organic onium ions as counterions. The ultrafine cellulose fiber-containing slurry, in which such an aggregate is generated, is subjected to vacuum filtration, so that an ultrafine cellulose fiber aggregate can be recovered.

The obtained ultrafine cellulose fiber aggregate may be washed with ion exchange water. By repeatedly washing the ultrafine cellulose fiber aggregate with ion exchange water, redundant organic onium ions and the like comprised in the ultrafine cellulose fiber aggregate can be removed.

The ratio of the content of N atoms to the content of P atoms (N/P value) in the obtained ultrafine cellulose fiber aggregate is preferably greater than 1.2, and more preferably greater than 2.0. On the other hand, the ratio of the content of N atoms to the content of P atoms (N/P value) in the obtained ultrafine cellulose fiber aggregate is preferably 5.0 or

less. Besides, the content of P atoms and the content of N atoms in the ultrafine cellulose fiber aggregate can be appropriately calculated by an elemental analysis. As such an elemental analysis, for example, a trace nitrogen analysis, a molybdenum blue method, etc. can be carried out after an appropriate pre-treatment. When a composition other than the ultrafine cellulose fiber aggregate comprises P atoms or N atoms, the composition may be separated from the ultrafine cellulose fiber aggregate according to a suitable method, and an elemental analysis may be then carried out.
The solid concentration of the obtained ultrafine cellulose fiber aggregate is preferably 20% by mass or more, more preferably 30% by mass or more, and further preferably 40% by mass or more. Besides, the upper limit value of the solid concentration of the ultrafine cellulose fiber aggregate is not particularly limited, and it may also be 100% by mass.
By drying the ultrafine cellulose fiber aggregate under constant temperature and constant humidity conditions, an ultrafine cellulose fiber concentrate is obtained. The temperature applied upon drying the cellulose fiber aggregate (concentrate) under constant temperature and constant humidity conditions is preferably 10°C or higher, and more preferably 20°C or higher. The temperature under constant temperature and constant humidity conditions is preferably 100°C or lower, more preferably 80°C or lower, and further preferably 60°C or lower. In addition, the relative humidity under constant temperature and constant humidity conditions is preferably 20% or more, and more preferably 30% or more. On the other hand, the relative humidity under constant temperature and constant humidity conditions is preferably 70% or less. Besides, the drying time applied upon drying under constant temperature and constant humidity conditions is preferably 10 minutes or more, more preferably 20 minutes or more, and further preferably 30 minutes or more. On the other hand, the drying time applied upon drying under constant temperature and constant humidity conditions is preferably 100 hours or less, and more preferably 80 hours or less.

(Intended use)

The cellulose fiber-containing composition of the present invention is preferably used to mix with an organic solvent. Specifically, the present cellulose fiber-containing composition can be used as a thickener or a particle dispersion stabilizer in a system comprising an organic solvent. In particular, the present cellulose fiber-containing composition can be preferably used to mix with an organic solvent containing a resin component. By mixing the ultrafine cellulose fibers of the present invention with an organic solvent containing a resin component, a resin composite, in which the ultrafine cellulose fibers are uniformly dispersed, can be formed. Likewise, a re-dispersed slurry of ultrafine cellulose fibers is used to form a film, and thus, can be used as various types of films.
Moreover, the cellulose fiber-containing composition of the present invention can be used, for example, as a reinforcing agent or an additive, in cements, paints, inks, lubricants, etc. Furthermore, the molded body obtained by applying the cellulose fiber-containing composition onto the base material is also suitable for intended uses, such as reinforcing materials, interior materials, exterior materials, wrapping materials, electronic materials, optical materials, acoustic materials, processing materials, transport equipment components, electronic equipment components, and electrochemical element components.

(Liquid composition)

The present invention also relates to a liquid composition formed by mixing the aforementioned cellulose fiber-containing composition with an organic solvent. The liquid composition is a cellulose fiber-containing dispersed solution (re-dispersed solution) in which the aforementioned ultrafine cellulose fiber-containing composition is dispersed in a dispersion medium comprising an organic solvent. Besides, the dispersion medium for the liquid composition of the present invention is preferably an organic solvent, but it may also be a dispersion medium further comprising water as well as the organic solvent. Examples of the organic solvent used herein may include the above-mentioned organic solvents.
The content of the organic solvent in the liquid composition is preferably 50% by mass or more, more preferably 60% by mass or more, and further preferably 70% by mass or more, with respect to the total mass of the liquid composition. On the other hand, the content of the organic solvent is preferably 99% by mass or less with respect to the total mass of the cellulose fiber-containing composition.
The solid concentration in the liquid composition is preferably 1% by mass or more, more preferably 10% by mass or more, and further preferably 20% by mass or more. On the other hand, the solid concentration in the liquid composition is preferably less than 50% by mass.
The liquid composition may further comprise a resin. The type of the resin is not particularly limited, and examples of the resin used herein may include the above-mentioned resins.

(Molded body)

The present invention also relates to a molded body formed from the aforementioned cellulose fiber-containing

composition or the aforementioned liquid composition. In this case, the cellulose fiber-containing composition and the liquid composition preferably comprise a resin. In the present invention, since ultrafine cellulose fibers excellent in terms of compatibility with an organic solvent and a resin are used, the molded body has excellent bending elastic modulus, and further has strength and dimensional stability. In addition, the molded body of the present invention is also excellent in terms of transparency.

The shape of the molded body of the present invention is not particularly limited, and for example, the molded body is preferably a sheet. The present invention may also relate to a sheet formed from the aforementioned cellulose fiber-containing composition or the aforementioned liquid composition.

The method of molding a molded body is not particularly limited, and an injection molding method, a heat and pressure molding method, etc. can be adopted. Moreover, when a sheet is molded from the molded body, the sheet may be molded by a press molding method or a vacuum molding method.

When the molded body is a sheet, the method of molding the molded body preferably comprises a step of applying the aforementioned liquid composition onto a base material. The material of the base material used in the coating step is not particularly limited. A base material having high wettability to the liquid composition is preferable because the shrinkage of the sheet upon drying is suppressed. It is preferable to select one from which the sheet formed after drying can be easily detached. Of these, a resin film or plate, or a metal film or plate is preferable, but is not particularly limited thereto. Examples of the base material that can be used herein may include: resin films or plates, such as those made of acryl, polyethylene terephthalate, vinyl chloride, polystyrene, polypropylene, polycarbonate, or polyvinylidene chloride; metal films or plates, such as those made of aluminum, zinc, copper, or iron; the aforementioned films or plates, the surfaces of which are subjected to an oxidation treatment; and stainless steel films or plates, and brass films or plates.

When the liquid composition has a low viscosity and thus, spreads on the base material in the coating step, a damming frame may be fixed and used on the base material in order to obtain a sheet having a predetermined thickness and basis weight. The damming frame is not particularly limited, and for example, it is preferable to select ones from which the edges of the sheet that adhere after drying can be easily detached. From such a viewpoint, frames molded from resin plates or metal plates are more preferable. In the present embodiment, example thereof that can be used herein may include frames molded from: resin plates such as acrylic plates, polyethylene terephthalate plates, vinyl chloride plates, polystyrene plates, polypropylene plates, polycarbonate plates, and polyvinylidene chloride plates; from metal plates such as aluminum plates, zinc plates, copper plates, and iron plates; from plates obtained by the oxidation treatment of surfaces thereof; and from stainless plates and brass plates.

A coater that can be used herein to apply the liquid composition onto the base material is not particularly limited, and examples of such a coater may include roll coaters, gravure coaters, die coaters, curtain coaters, and air doctor coaters. Among these, die coaters, curtain coaters, and spray coaters are particularly preferable because these coaters can provide more even thickness to the coated film (sheet).

The temperature of the liquid composition upon the application thereof onto the base material and the ambient temperature are not particularly limited, and for example, these temperatures are preferably 5°C or higher and 80°C or lower, more preferably 10°C or higher and 60°C or lower, further preferably 15°C or higher and 50°C or lower, and particularly preferably 20°C or higher and 40°C or lower.

In the coating step, it is preferable to apply the liquid composition onto the base material, so as to achieve a finished basis weight of the sheet that is preferably 10 g/$m^2$ or more and 100 g/$m^2$ or less, and is more preferably, 20 g/$m^2$ or more and 60 g/$m^2$ or less. By applying the liquid composition onto the base material so as to achieve a basis weight that is within the above-described range, a sheet having more excellent strength can be obtained.

The coating step includes a step of drying the liquid composition applied onto the base material. The step of drying the liquid composition is not particularly limited, and the drying is carried out according to a contactless drying method, a method of drying the sheet while locking it, or a combination thereof. The contactless drying method is not particularly limited, and for example, a method for drying by heating with hot air, infrared radiation, far-infrared radiation, or near-infrared radiation (a drying method by heating) or a method for drying in vacuum (a vacuum drying method) can be applied. The drying method by heating may be combined with the vacuum drying method, but the drying method by heating is generally applied. The drying with infrared radiation, far-infrared radiation, or near-infrared radiation is not particularly limited, and it can be performed, for example, using an infrared apparatus, a far-infrared apparatus, or a near-infrared apparatus. The heating temperature applied in the drying method by heating is not particularly limited, and for example, it is preferably 20°C or higher and 150°C or lower, and more preferably 25°C or higher and 105°C or lower. If the heating temperature is set to be equal to or higher than the above-described lower limit value, the dispersion medium can be rapidly volatilized. On the other hand, if the heating temperature is set to be equal to or lower than the above-described upper limit value, reduction in costs required for the heating and suppression of the thermal discoloration of the cellulose fibers can be realized.

Examples

The present invention will be more specifically described in the following examples. However, the following examples are not intended to limit the scope of the present invention.

< Production Example 1 >

[Production of ultrafine cellulose fiber-dispersed solution (A)]

The needle bleached kraft pulp manufactured by Oji Paper Co., Ltd. (solid content: 93% by mass; basis weight: 208 g/$m^2$, sheet-shaped; Canadian Standard Freeness (CSF) measured according to JIS P 8121 after defibration: 700 ml) was used as a raw material pulp.

A phosphorylation treatment was performed on this raw material pulp as follows. First, a mixed aqueous solution of ammonium dihydrogen phosphate and urea was added to 100 parts by mass (absolute dry mass) of the above raw material pulp, and the obtained mixture was adjusted to result in 45 parts by mass of the ammonium dihydrogen phosphate, 120 parts by mass of the urea and 150 parts by mass of water, so as to obtain a chemical-impregnated pulp. Subsequently, the obtained chemical-impregnated pulp was heated in a hot-air dryer at 165°C for 200 seconds, so that phosphoric acid groups were introduced into cellulose in the pulp, thereby obtaining a phosphorylated pulp.

Subsequently, a washing treatment was performed on the obtained phosphorylated pulp. The washing treatment was carried out by repeating the operation to pour 10 L of ion exchange water onto 100 g (absolute dry mass) of the phosphorylated pulp to obtain a pulp dispersed solution, which was then uniformly dispersed by stirring, followed by filtration and dehydration. The washing was terminated at a time point at which the electric conductivity of the filtrate became 100 μS/cm or less.

The above-described phosphorylation treatment and the above-described washing treatment were each performed once in this order on the phosphorylated pulp after completion of the washing.

Subsequently, a neutralization treatment was performed on the phosphorylated pulp after the washing as follows. First, the phosphorylated pulp after the washing was diluted with 10 L of ion exchange water, and then, while stirring, a 1 N sodium hydroxide aqueous solution was slowly added to the diluted solution to obtain a phosphorylated pulp slurry having a pH value of 12 or more and 13 or less. Thereafter, the phosphorylated pulp slurry was dehydrated, so as to obtain a neutralized phosphorylated pulp. Subsequently, the above-described washing treatment was performed on the phosphorylated pulp after the neutralization treatment.

The infrared absorption spectrum of the obtained phosphorylated pulp was measured by FT-IR. As a result, absorption based on the phosphoric acid groups was observed around 1230 $cm^{-1}$, and thus, addition of the phosphoric acid groups to the pulp was confirmed.

Moreover, the obtained phosphorylated pulp was analyzed using an X-ray diffractometer. As a result, it was confirmed that there were typical peaks at two positions near $2\theta$ = 14° or more and 17° or less, and near $2\theta$ = 22° or more and 23° or less. Thus, the phosphorylated pulp was confirmed to have cellulose type I crystals.

Ion exchange water was added to the obtained phosphorylated pulp, so as to prepare a slurry having a solid concentration of 2% by mass. This slurry was treated using a wet atomization apparatus (manufactured by Sugino Machine Limited, Star Burst) at a pressure of 200 MPa six times to obtain an ultrafine cellulose fiber-dispersed solution (A) comprising ultrafine cellulose fibers.

It was confirmed according to X-ray diffraction that these ultrafine cellulose fibers maintained cellulose type I crystals. Moreover, the fiber width of the ultrafine cellulose fibers was measured using a transmission electron microscope. As a result, the fiber width was 3 to 5 nm. Besides, the amount of phosphoric acid groups (the amount of strong acid groups) measured by the after-mentioned measurement method was 2.0 mmol/g.

< Production Example 2 >

[Production of ultrafine cellulose fiber-dispersed solution (B)]

The needle bleached kraft pulp manufactured by Oji Paper Co., Ltd. (solid content: 93% by mass; basis weight: 208 g/$m^2$, sheet-shaped; Canadian Standard Freeness (CSF) measured according to JIS P 8121 after defibration: 700 ml) was used as a raw material pulp. A TEMPO oxidation treatment was performed on this raw material pulp as follows.

First, the above-described raw material pulp corresponding to 100 parts by mass (dry mass), 1.6 parts by mass of TEMPO (2,2,6,6-tetramethylpiperidin-1-oxyl), and 10 parts by mass of sodium bromide were dispersed in 10000 parts by mass of water. Subsequently, an aqueous solution containing 13% by mass of sodium hypochlorite was added to the obtained solution, such that the amount of sodium hypochlorite became 10 mmol with respect to 1.0 g of the pulp, so as to start the reaction. During the reaction, the pH was kept at pH 10 or more and pH 10.5 or less by the dropwise

addition of a 0.5 M sodium hydroxide aqueous solution. The time point at which change in the pH was no longer seen was considered to be termination of the reaction.

Subsequently, a washing treatment was performed on the obtained TEMPO-oxidized pulp. The washing treatment was carried out by repeating the operation of dehydrating the pulp slurry after the TEMPO oxidation to obtain a dehydrated sheet, then pouring 5000 parts by mass of ion exchange water onto the dehydrated sheet, which was then uniformly dispersed by stirring, and was then subjected to filtration and dehydration. The washing was terminated at a time point at which the electric conductivity of the filtrate became 100 μS/cm or less.

In addition, the obtained TEMPO-oxidized pulp was analyzed using an X-ray diffractometer. As a result, it was confirmed that there were typical peaks at two positions near $2\theta$ = 14° or more and 17° or less, and near $2\theta$ = 22° or more and 23° or less. Thus, the TEMPO-oxidized pulp was confirmed to have cellulose type I crystals.

Ion exchange water was added to the obtained TEMPO-oxidized pulp, so as to prepare a slurry having a solid concentration of 2% by mass. This slurry was treated using a wet atomization apparatus (manufactured by Sugino Machine Limited, Star Burst) at a pressure of 200 MPa six times to obtain an ultrafine cellulose fiber-dispersed solution (B) comprising ultrafine cellulose fibers.

It was confirmed according to X-ray diffraction that these ultrafine cellulose fibers maintained cellulose type I crystals. Moreover, the fiber width of the ultrafine cellulose fibers was measured using a transmission electron microscope, and as a result, the fiber width was 3 to 5 nm. Besides, regarding the TEMPO-oxidized pulp, the amount of carboxy groups measured by the after-mentioned method was 1.80 mmol/g.

< Example 1 >

[Production of ultrafine cellulose fiber concentrate]

0.60 g of Lactic acid had previously been added to 100 g of an aqueous solution containing 2.43% by mass of N,N-didodecylmethylamine for neutralization, and the obtained mixture was then added to 100 g of the ultrafine cellulose fiber-dispersed solution (A) obtained in Production Example 1. While the liquid temperature was kept at 5°C by using a heating medium (hereinafter referred to as a "stirring treatment temperature"), a stirring treatment was performed for 5 minutes using a disperser. As a result, an aggregate was generated in the ultrafine cellulose fiber-dispersed solution. The ultrafine cellulose fiber-dispersed solution comprising such an aggregate was filtrated under reduced pressure to obtain an ultrafine cellulose fiber aggregate. The obtained ultrafine cellulose fiber aggregate was repeatedly washed with ion exchange water to remove redundant N,N-didodecylmethylamine and lactic acid contained in the ultrafine cellulose fiber aggregate, eluted ions, and the like. The obtained ultrafine cellulose fiber aggregate was dried under conditions of 30°C and a relative humidity of 40%, so as to obtain an ultrafine cellulose fiber concentrate (cellulose fiber-containing composition).

The counterions of the phosphoric acid groups comprised in the ultrafine cellulose fiber concentrate were N,N-didodecylmethyl ammonium ions ($DDMA^+$). The solid concentration of the obtained ultrafine cellulose fiber concentrate was 93% by mass. The amount of metal ions and the amount of chloride ions comprised in the absolute dry solid of the obtained ultrafine cellulose fiber concentrate were measured by the after-mentioned methods.

[Re-dispersion of ultrafine cellulose fiber concentrate]

N-methyl-2-pyrrolidone (NMP) was added to the ultrafine cellulose fiber concentrate, so that the content of the ultrafine cellulose fibers became 2.0% by mass. Thereafter, using an ultrasonic homogenizer (manufactured by Hielscher, UP400S), an ultrasonic treatment was carried out for 10 minutes to obtain a re-dispersed slurry of the ultrafine cellulose fibers. The viscosity and light transmittance at a wavelength of 600 nm of the obtained re-dispersed slurry of ultrafine cellulose fibers were measured by the after-mentioned methods.

< Example 2 >

An ultrafine cellulose fiber concentrate and a re-dispersed slurry of ultrafine cellulose fibers were obtained in the same manner as that of Example 1, with the exception that the stirring treatment temperature was set at 20°C upon the production of the ultrafine cellulose fiber concentrate. The solid concentration of the obtained ultrafine cellulose fiber concentrate was 95% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Example 3 >

The ultrafine cellulose fiber-dispersed solution (B) obtained in Production Example 2 was used instead of the ultrafine cellulose fiber-dispersed solution (A). An ultrafine cellulose fiber concentrate was obtained in the same manner as that of Example 1, with the exception that 0.32 g of lactic acid was added to 100 g of an aqueous solution containing 1.32% by mass of N,N-didodecylmethylamine for neutralization, and the obtained mixture was then added to the ultrafine cellulose fiber-dispersed solution (B). The counterions of the carboxy groups comprised in the ultrafine cellulose fiber concentrate were N,N-didodecylmethyl ammonium ions ($DDMA^+$). The solid concentration of the obtained ultrafine cellulose fiber concentrate was 90% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Example 4 >

An ultrafine cellulose fiber concentrate and a re-dispersed slurry of ultrafine cellulose fibers were obtained in the same manner as that of Example 3, with the exception that the stirring treatment temperature was set at 20°C upon the production of the ultrafine cellulose fiber concentrate. The solid concentration of the obtained ultrafine cellulose fiber concentrate was 91% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Comparative Example 1 >

An ultrafine cellulose fiber concentrate and a re-dispersed slurry of ultrafine cellulose fibers were obtained in the same manner as that of Example 1, with the exception that the stirring treatment temperature was set at 80°C upon the production of the ultrafine cellulose fiber concentrate. The solid concentration of the obtained ultrafine cellulose fiber concentrate was 93% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Comparative Example 2 >

An ultrafine cellulose fiber concentrate and a re-dispersed slurry of ultrafine cellulose fibers were obtained in the same manner as that of Example 3, with the exception that the stirring treatment temperature was set at 80°C upon the production of the ultrafine cellulose fiber concentrate. The solid concentration of the obtained ultrafine cellulose fiber concentrate was 93% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Comparative Example 3 >

An ultrafine cellulose fiber concentrate and a re-dispersed slurry of ultrafine cellulose fibers were obtained in the same manner as that of Example 2, with the exceptions that, upon the production of the ultrafine cellulose fiber concentrate, neutralization with lactic acid had not been carried out in advance, and that 100 g of an aqueous solution containing 2.43% by mass of N,N-didodecylmethylamine was directly added to the ultrafine cellulose fiber-dispersed solution (A). The solid concentration of the obtained ultrafine cellulose fiber concentrate was 86% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Comparative Example 4 >

[Production of acid-type ultrafine cellulose fibers]

1 N Hydrochloric acid was added to 100 g of the ultrafine cellulose fiber-dispersed solution (A) obtained in Production Example 1 to adjust the pH value to pH 1, and a stirring treatment was then carried out for 1 hour using a disperser. Thereafter, the reaction solution was centrifuged using a cooled high-speed centrifugal separator (manufactured by KOKUSAN Co. Ltd., H-2000B) at 12000 G for 10 minutes, so as to obtain an ultrafine cellulose fiber gel. Ion exchange water was added to the obtained ultrafine cellulose fiber gel, and a stirring treatment was then carried out. As a result, the ultrafine cellulose fiber gel swelled, and redundant hydrochloric acid contained in the ultrafine cellulose fiber gel and eluted ions could not be removed, and thus, the gel could not be subjected to a reaction step with organic amine.

< Comparative Example 5 >

[Production of acid-type ultrafine cellulose fiber gel]

1 N Hydrochloric acid was added to 150 g of the ultrafine cellulose fiber-dispersed solution (B) obtained in Production Example 2 to adjust the pH value to pH 1, and a stirring treatment was then carried out for 1 hour using a disperser. Thereafter, the reaction solution was centrifuged using a cooled high-speed centrifugal separator (manufactured by KOKUSAN Co. Ltd., H-2000B) at 12000 G for 10 minutes, so as to obtain an ultrafine cellulose fiber gel. Ion exchange water was added to the obtained ultrafine cellulose fiber gel, and then, after completion of a stirring treatment, the reaction solution was centrifuged at 12000 G for 10 minutes to obtain an ultrafine cellulose fiber gel. This step was repeated four times, so that redundant hydrochloric acid contained in the ultrafine cellulose fiber gel and eluted ions were removed. The carboxy groups contained in the obtained ultrafine cellulose fiber gel were acid-type carboxy groups. In addition, the solid concentration of the obtained ultrafine cellulose fiber gel was 2.5% by mass.

[Reaction step with organic amine]

To 100 g of the obtained acid-type ultrafine cellulose fiber gel, 50 g of isopropanol (IPA) was added, and thereafter, using an ultrasonic homogenizer (manufactured by Hielscher, UP400S), an ultrasonic treatment was carried out for 1 minutes to obtain an acid-type ultrafine cellulose fiber-dispersed solution. To the obtained acid-type ultrafine cellulose fiber-dispersed solution, 50 g of a solution containing 3.3% by mass of N,N-didodecylmethylamine was added, and a stirring treatment was then carried out for 24 hours. At this time, although the reaction solution became clouded, generation of an aggregate was not confirmed. Subsequently, the reaction solution was added to 4 L of ion exchange water. As a result, an aggregate was generated in the water. The ultrafine cellulose fiber-dispersed solution, in which the aggregate was generated, was filtrated under reduced pressure to obtain an ultrafine cellulose fiber aggregate. By repeatedly washing the obtained ultrafine cellulose fiber aggregate with ion exchange water, redundant N,N-didodecylmethylamine and IPA contained in the ultrafine cellulose fiber aggregate, eluted ions, and the like were removed. The obtained ultrafine cellulose fiber aggregate was dried under conditions of 30°C and a relative humidity of 40% to obtain an ultrafine cellulose fiber concentrate. The solid concentration of the obtained ultrafine cellulose fiber concentrate was 93% by mass. The amount of metal ions and the amount of chloride ions comprised in the absolute dry solid of the obtained ultrafine cellulose fiber concentrate were measured by the after-mentioned methods.

[Re-dispersion of ultrafine cellulose fiber concentrate]

A re-dispersed slurry of ultrafine cellulose fibers was obtained in the same manner as that of Example 1. The viscosity and light transmittance at a wavelength of 600 nm of the obtained re-dispersed slurry of ultrafine cellulose fibers were measured by the after-mentioned methods.

< Example 5 >

3.86 g of Di-n-alkyldimethyl ammonium chloride (wherein the number of carbon atoms in the alkyl chain was 16 or 18) was dissolved in 96.1 g of ion exchange water at 80°C, and the obtained solution was then cooled to normal temperature, so as to obtain an aqueous solution containing 3.86% by mass of di-n-alkyldimethyl ammonium chloride. An ultrafine cellulose fiber concentrate and a re-dispersed slurry of ultrafine cellulose fibers were obtained in the same manner as that of Example 1, with the exceptions that 100 g of the aqueous solution containing 3.86% by mass of di-n-alkyldimethyl ammonium chloride was used instead of the N,N-didodecylmethylamine aqueous solution neutralized with lactic acid, and that toluene was added, instead of N-methyl-2-pyrrolidone (NMP), to the ultrafine cellulose fiber concentrate. The counterions of the phosphoric acid groups comprised in the ultrafine cellulose fiber concentrate were di-n-alkyldimethyl ammonium ions ($DADMA^+$). The solid concentration of the obtained ultrafine cellulose fiber concentrate was 91% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Example 6 >

An ultrafine cellulose fiber concentrate and a re-dispersed slurry of ultrafine cellulose fibers were obtained in the same manner as that of Example 5, with the exception that the stirring treatment temperature was set at 20°C upon the production of the ultrafine cellulose fiber concentrate. The solid concentration of the obtained ultrafine cellulose fiber concentrate was 90% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Example 7 >

2.10 g of Di-n-alkyldimethyl ammonium chloride (wherein the number of carbon atoms in the alkyl chain was 16 or 18) was dissolved in 97.9 g of ion exchange water at 80°C, and the obtained solution was then cooled to normal temperature, so as to obtain an aqueous solution containing 2.10% by mass of di-n-alkyldimethyl ammonium chloride. An ultrafine cellulose fiber concentrate was obtained in the same manner as that of Example 5, with the exceptions that the ultrafine cellulose fiber-dispersed solution (B) obtained in Production Example 2 was used instead of the ultrafine cellulose fiber-dispersed solution (A), and that 100 g of the aqueous solution containing 2.10% by mass of di-n-alkyldimethyl ammonium chloride was added to the ultrafine cellulose fiber-dispersed solution (B). The counterions of the carboxy groups comprised in the ultrafine cellulose fiber concentrate were di-n-alkyldimethyl ammonium ions ($DADMA^+$). The solid concentration of the obtained ultrafine cellulose fiber concentrate was 89% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Comparative Example 6 >

An ultrafine cellulose fiber concentrate and a re-dispersed slurry of ultrafine cellulose fibers were obtained in the same manner as that of Example 5, with the exception that the stirring treatment temperature was set at 80°C upon the production of the ultrafine cellulose fiber concentrate. The solid concentration of the obtained ultrafine cellulose fiber concentrate was 93% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Comparative Example 7 >

An ultrafine cellulose fiber concentrate and a re-dispersed slurry of ultrafine cellulose fibers were obtained in the same manner as that of Example 7, with the exception that the stirring treatment temperature was set at 80°C upon the production of the ultrafine cellulose fiber concentrate. The solid concentration of the obtained ultrafine cellulose fiber concentrate was 93% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Comparative Example 8 >

3.86 g of Di-n-alkyldimethyl ammonium chloride (wherein the number of carbon atoms in the alkyl chain was 16 or 18) was dissolved in a 67% IPA aqueous solution at normal temperature to obtain a solution containing 3.86% by mass of di-n-alkyldimethyl ammonium chloride. An ultrafine cellulose fiber concentrate and a re-dispersed slurry of ultrafine cellulose fibers were obtained in the same manner as that of Example 6, with the exception that 100 g of the obtained di-n-alkyldimethyl ammonium chloride solution was added to the ultrafine cellulose fiber-dispersed solution (A). The solid concentration of the obtained ultrafine cellulose fiber concentrate was 93% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Example 8 >

2.33 g of Alkyldimethylbenzylammonium chloride (wherein the number of carbon atoms in the alkyl chain was 8 to 18) was dissolved in 97.7 g of ion exchange water at 80°C, and the obtained solution was then cooled to normal

temperature, so as to obtain an aqueous solution containing 2.33% by mass of alkyldimethylbenzylammonium chloride. An ultrafine cellulose fiber concentrate and a re-dispersed slurry of ultrafine cellulose fibers were obtained in the same manner as that of Example 1, with the exceptions that 100 g of the aqueous solution containing 2.33% by mass of alkyldimethylbenzylammonium chloride was used instead of the aqueous solution containing N,N-didodecylmethylamine neutralized with lactic acid, and that methanol was added, instead of N-methyl-2-pyrrolidone (NMP), to the ultrafine cellulose fiber concentrate. The counterions of the phosphoric acid groups comprised in the ultrafine cellulose fiber concentrate were alkyldimethylbenzylammonium ions ($ADMBA^+$). The solid concentration of the obtained ultrafine cellulose fiber concentrate was 84% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Example 9 >

An ultrafine cellulose fiber concentrate and a re-dispersed slurry of ultrafine cellulose fibers were obtained in the same manner as that of Example 8, with the exception that the stirring treatment temperature was set at 20°C upon the production of the ultrafine cellulose fiber concentrate. The solid concentration of the obtained ultrafine cellulose fiber concentrate was 83% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Example 10 >

1.27 g of Alkyldimethylbenzylammonium chloride (wherein the number of carbon atoms in the alkyl chain was 8 to 18) was dissolved in 98.7 g of ion exchange water at 80°C, and the obtained solution was then cooled to normal temperature, so as to obtain an aqueous solution containing 1.27% by mass of alkyldimethylbenzylammonium chloride. An ultrafine cellulose fiber concentrate was obtained in the same manner as that of Example 8, with the exceptions that the ultrafine cellulose fiber-dispersed solution (B) obtained in Production Example 2 was used instead of the ultrafine cellulose fiber-dispersed solution (A), and that 100 g of the aqueous solution containing 1.27% by mass of alkyldimethylbenzylammonium was added to the ultrafine cellulose fiber-dispersed solution (B). The counterions of the carboxy groups comprised in the ultrafine cellulose fiber concentrate were alkyldimethylbenzylammonium ions ($ADMBA^+$). The solid concentration of the obtained ultrafine cellulose fiber concentrate was 81% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Comparative Example 9 >

An ultrafine cellulose fiber concentrate and a re-dispersed slurry of ultrafine cellulose fibers were obtained in the same manner as that of Example 8, with the exception that the stirring treatment temperature was set at 80°C upon the production of the ultrafine cellulose fiber concentrate. The solid concentration of the obtained ultrafine cellulose fiber concentrate was 82% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Comparative Example 10 >

An ultrafine cellulose fiber concentrate and a re-dispersed slurry of ultrafine cellulose fibers were obtained in the same manner as that of Example 10, with the exception that the stirring treatment temperature was set at 80°C upon the production of the ultrafine cellulose fiber concentrate. The solid concentration of the obtained ultrafine cellulose fiber concentrate was 82% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Comparative Example 11 >

2.33 g of Alkyldimethylbenzylammonium chloride (wherein the number of carbon atoms in the alkyl chain was 8 to 18) was dissolved in a 67% IPA aqueous solution at normal temperature, so as to obtain a solution containing 3.86%

by mass of alkyldimethylbenzylammonium chloride. An ultrafine cellulose fiber concentrate and a re-dispersed slurry of ultrafine cellulose fibers were obtained in the same manner as that of Example 9, with the exception that 100 g of the obtained alkyldimethylbenzylammonium chloride solution was added to the ultrafine cellulose fiber-dispersed solution (A). The solid concentration of the obtained ultrafine cellulose fiber concentrate was 93% by mass. The amount of metal ions and the amount of chloride ions comprised in the absolute dry solid of the obtained ultrafine cellulose fiber concentrate, and the viscosity and light transmittance at a wavelength of 600 nm of the obtained re-dispersed slurry of ultrafine cellulose fibers, were measured by the after-mentioned methods.

< Evaluation >

[Measurement of amount of phosphoric acid groups]

The amount of phosphoric acid groups in the ultrafine cellulose fibers was measured by treating with an ion exchange resin, a cellulose fiber-containing slurry prepared by diluting an ultrafine cellulose fiber-dispersed solution comprising the ultrafine cellulose fibers as targets with ion exchange water to result in a content of 0.2% by mass, and then performing titration using alkali.

In the treatment with the ion exchange resin, 1/10 by volume of a strongly acidic ion exchange resin (Amberjet 1024; manufactured by Organo Corporation; conditioned) was added to the aforementioned cellulose fiber-containing slurry, and the resultant mixture was shaken for 1 hour. Then, the mixture was poured onto a mesh having 90-μm apertures to separate the resin from the slurry.

In the titration using alkali, a change in the electric conductivity value indicated by the slurry was measured while adding an aqueous solution of 0.1 N sodium hydroxide, once 30 seconds, in each amount of 50 μL, to the cellulose fiber-containing slurry after completion of the treatment with the ion exchange resin. Specifically, among the calculation results, the alkali amount (mmol) required in a region corresponding to the first region shown in Figure 1 was divided by the solid content (g) in the slurry to be titrated, so as to obtain the amount of phosphoric acid groups (mmol/g).

[Measurement of amount of carboxy groups]

The amount of carboxy groups in the ultrafine cellulose fibers was measured by treating with an ion exchange resin, a cellulose fiber-containing slurry prepared by diluting an ultrafine cellulose fiber-dispersed solution comprising the ultrafine cellulose fibers as targets with ion exchange water to result in a content of 0.2% by mass, and then performing titration using alkali.

In the treatment with the ion exchange resin, 1/10 by volume of a strongly acidic ion exchange resin (Amberjet 1024; manufactured by Organo Corporation; conditioned) was added to the aforementioned cellulose fiber-containing slurry, and the resultant mixture was shaken for 1 hour. Then, the mixture was poured onto a mesh having 90-μm apertures to separate the resin from the slurry.

In the titration using alkali, a change in the electric conductivity value indicated by the slurry was measured while adding an aqueous solution of 0.1 N sodium hydroxide, once 30 seconds, in each amount of 50 μL, to the cellulose fiber-containing slurry after completion of the treatment with the ion exchange resin. Specifically, among the calculation results, the alkali amount (mmol) required in a region corresponding to the first region shown in Figure 2 was divided by the solid content (g) in the slurry to be titrated, so as to obtain the amount of carboxy groups (mmol/g).

[Viscosity of re-dispersed slurry of ultrafine cellulose fibers]

The viscosity of the ultrafine cellulose fiber-containing slurry was measured using a type B viscometer (manufactured by BROOKFIELD; analog viscometer T-LVT), after the ultrafine cellulose fiber-containing slurry had been left at rest at 25°C for 24 hours. The concentration of the re-dispersed slurry of ultrafine cellulose fibers was set at 2.0% by mass, when the dielectric constant of the organic solvent as a dispersion target was 5.0 or more. The concentration of the re-dispersed slurry of ultrafine cellulose fibers was set at 4.0% by mass, when the dielectric constant of the organic solvent as a dispersion target was less than 5.0. Regarding measurement conditions, the ultrafine cellulose fiber-containing slurry was rotated at 25°C at 3 rpm for 3 minutes, and then, the viscosity thereof was measured.

[Measurement of total light transmittance of re-dispersed slurry of ultrafine cellulose fibers at wavelength of 600 nm]

Employing an ultraviolet and visible spectrophotometer (manufactured by Optima Co., Ltd., SP-3000 Nano), the total light transmittance of a re-dispersed slurry of ultrafine cellulose fibers at a wavelength of 600 nm was measured using a liquid glass cell having an optical path length of 1 cm. Upon the measurement, the concentration of the re-dispersed slurry of ultrafine cellulose fibers was set at 2.0% by mass, when the dielectric constant of the organic solvent

as a dispersion target was 5.0 or more. When the dielectric constant of the organic solvent as a dispersion target was less than 5.0, the concentration of the re-dispersed slurry of ultrafine cellulose fibers was set at 4.0% by mass.

[Measurement of amount of metal ions contained in absolute dry solid of ultrafine cellulose fiber concentrate]

An ultrafine cellulose fiber concentrate was dried at 105°C, until it became absolutely dried, so as to obtain an absolute dry solid of the ultrafine cellulose fiber concentrate. To 0.1 g of this absolute dry solid, 5.0 mL of nitric acid was added, and wet degradation was then carried out using a wet degradation apparatus (manufactured by CEM, MARS5). Thereafter, using an ICP emission spectrophotometric analyzer (manufactured by AMETEK, CIROS120), the amount of metal ions contained in the absolute dry solid of the ultrafine cellulose fiber concentrate was measured.

[Measurement of amount of chloride ions contained in absolute dry solid of ultrafine cellulose fiber concentrate]

An ultrafine cellulose fiber concentrate was dried at 105°C, until it became absolutely dried, so as to obtain an absolute dry solid of the ultrafine cellulose fiber concentrate. This absolute dry solid was burnt in an oxygen atmosphere in accordance with JIS Z 7302-6, using a total chlorine content tester (manufactured by Yoshida Seisakusho Co., Ltd., cylinder type). Thereafter, using an ion chromatography (manufactured by Thermo Fisher Scientific, ICS2100), the amount of chloride ions contained in the absolute dry solid of the ultrafine cellulose fiber concentrate was measured.

[Table 1]

| | Anionic group of cellulose fibers | Counterion of anionic group before reaction | Counterion of anionic group after reaction | Temperature [°C] during reaction | Acid washing | Pre-neutralization of amine | Solvent as dispersion target | Cellulose fiber-containing composition | | Properties after dispersion in organic solvent | |
|---|---|---|---|---|---|---|---|---|---|---|---|
| | | | | | | | | Amount of metal ion [ppm] | Amount of chloride ion [ppm] | Viscosity [mPa·s] at 2.0 mass % | 600 nm light transmittance [%] at 2.0 mass % |
| Ex. 1 | Phosphate group | Na type | N,N-didodecylmethyl ammonium | 5 | No | Yes | NMP | 126 | 56 | 18200 | 85.5 |
| Ex. 2 | | | | 20 | No | Yes | | 131 | 62 | 17680 | 84.3 |
| Ex. 3 | Carboxy group | | N,N-didodecylmethyl ammonium | 5 | No | Yes | | 178 | 75 | 7240 | 52.3 |
| Ex. 4 | | | | 20 | No | Yes | | 185 | 78 | 7800 | 53.0 |
| Comp. Ex. 1 | Phosphate group | | N,N-didodecy lmethyl ammonium | 80 | No | Yes | | 710 | 105 | 410 | 64.0 |
| Comp. Ex. 2 | Carboxy group | | N,N-didodecylmethyl ammonium | | No | Yes | | 783 | 148 | 360 | 43.2 |
| Comp. Ex. 3 | Phosphate group | | N,N-didodecylmethyl ammonium | 20 | No | No | | 936 | 240 | 230 | 37.4 |
| Comp. Ex. 4 | | H type | - | | Yes | No | | - | - | - | - |
| Comp. Ex. 5 | Carboxy group | | N,N-didodecylmethyl ammonium | | Yes | No | | 75 | 346 | 7600 | 47.1 |

[Table 2]

| | Anionic group of cellulose fibers | Counterion of anionic group before reaction | Counterion of anionic group after reaction | Temperature [°C] during reaction | Method of dissolving ammonium salt | Solvent as dispersion target | Cellulose fiber-containing composition | | Properties after dispersion in organic solvent | |
|---|---|---|---|---|---|---|---|---|---|---|
| | | | | | | | Amount of metal ion [ppm] | Amount of chloride ion [ppm] | Viscosity [mPa·s] at 4.0 mass % | 600 nm light transmittance [%] at 4.0 mass % |
| Ex. 5 | Phosphate group | Na type | Di-n-alkyldimethyl ammonium | 5 | Dissolving in hot water | Toluene | 87 | 3600 | 7140 | 80.5 |
| Ex. 6 | | | | 20 | | | 94 | 3970 | 6400 | 79.0 |
| Ex. 7 | Carboxy group | | | 5 | | | 350 | 4460 | 3800 | 66.8 |
| Comp. Ex. 6 | Phosphate group | | | 80 | | | 750 | 4320 | 310 | 55.2 |
| Comp. Ex. 7 | Carboxy group | | | | | | 823 | 4800 | Precipitated | Precipitated |
| Comp. Ex. 8 | Phosphate group | | | 20 | Dissolving in IPA/ water (2/1) solution at normal temperature | | 910 | 6800 | 340 | 57.2 |

[Table 3]

| | Anionic group of cellulose fibers | Counterion of anionic group before reaction | Counterion of anionic group after reaction | Temperature [°C] during reaction | Method of dissolving ammonium salt | Solvent as dispersion target | Cellulose fiber-containing composition | | Properties after dispersion in organic solvent | |
|---|---|---|---|---|---|---|---|---|---|---|
| | | | | | | | Amount of metal ion [ppm] | Amount of chloride ion [ppm] | Viscosity [mPa·s] at 2.0 mass % | 600 nm light transmittance [%] at 2.0 mass % |
| Ex. 8 | Phosphate group | Na type | Alkyldimethylbenzyl ammonium | 5 | Dissolving in hot water | Methanol | 259 | 2160 | 23000 | 75.4 |
| Ex. 9 | | | | 20 | | | 299 | 2300 | 21460 | 74.2 |
| Ex. 10 | Carboxy group | | | 5 | | | 457 | 2640 | 13040 | 63.6 |
| Comp. Ex. 9 | Phosphate group | | | 80 | | | 980 | 2330 | 3400 | 36.2 |
| Comp. Ex. 10 | Carboxy group | | | | | | 1030 | 2780 | 2850 | 29.7 |
| Comp. Ex. 11 | Phosphate group | | | 20 | Dissolving in IPA/water (2/1) solution at normal temperature | | 1450 | 4010 | 2300 | 25.0 |

Since the content of the metal ions in the ultrafine cellulose fiber concentrate (cellulose fiber-containing composition) obtained in each of the Examples was within a predetermined range, a re-dispersed slurry of ultrafine cellulose fibers had high viscosity and high transparency.

In Comparative Example 3, upon the production of the ultrafine cellulose fiber concentrate, neutralization with lactic acid had not been carried out in advance, and an aqueous solution of N,N-didodecylmethylamine was mixed with ultrafine cellulose fibers. Hence, protonation of amino groups hardly occurred, the exchange of the counterions with sodium ions did not progress, and thus, the amount of the metal ions exceeded 700 ppm.

In Comparative Example 4, when water was added to the acid-type ultrafine cellulose fiber gel obtained after the hydrochloric acid treatment, the gel swelled. As a result, the hydrochloric acid remaining in large amounts in the reaction system and eluted ions could not be washed away by centrifugation, and thus, a cellulose fiber-containing composition of interest could not be obtained.

In Comparative Examples 8 and 11, an alkyl ammonium solution prepared by dissolving alkyl ammonium in an IPA/water (2/1) solution at normal temperature was used, and the amount of the metal ions in the obtained ultrafine cellulose fiber-containing composition exceeded 700 ppm.

## Claims

**1.** A cellulose fiber-containing composition comprising cellulose fibers with a fiber width of 1000 nm or less having anionic groups, and metal ions, wherein
the cellulose fiber-containing composition comprising organic onium ions as counterions of the anionic groups, and when a solid in the cellulose fiber-containing composition is converted to an absolute dry solid, the content of the metal ions in the absolute dry solid is 80 ppm or more and 700 ppm or less.

**2.** The cellulose fiber-containing composition according to claim 1, wherein the amount of the anionic groups in the cellulose fibers is 0.50 mmol/g or more.

**3.** The cellulose fiber-containing composition according to claim 1 or 2, wherein the organic onium ions satisfy at least one condition selected from the following (a) and (b):

(a) containing a hydrocarbon group having 5 or more carbon atoms; and
(b) having a total carbon number of 17 or more.

**4.** The cellulose fiber-containing composition according to any one of claims 1 to 3, wherein the organic onium ions are organic ammonium ions.

**5.** The cellulose fiber-containing composition according to any one of claims 1 to 4, wherein the metal ions are at least one type selected from alkali metal ions and alkaline earth metal ions.

**6.** The cellulose fiber-containing composition according to any one of claims 1 to 5, wherein the solid concentration is 80% by mass or more.

**7.** The cellulose fiber-containing composition according to any one of claims 1 to 6, which is a solid form.

**8.** The cellulose fiber-containing composition according to any one of claims 1 to 7, which is a particulate material.

**9.** A liquid composition formed by mixing the cellulose fiber-containing composition according to any one of claims 1 to 8 with an organic solvent.

**10.** The liquid composition according to claim 9, further comprising a resin.

**11.** A molded body formed from the cellulose fiber-containing composition according to any one of claims 1 to 8 or the liquid composition according to claim 9 or 10.

[Figure 1]

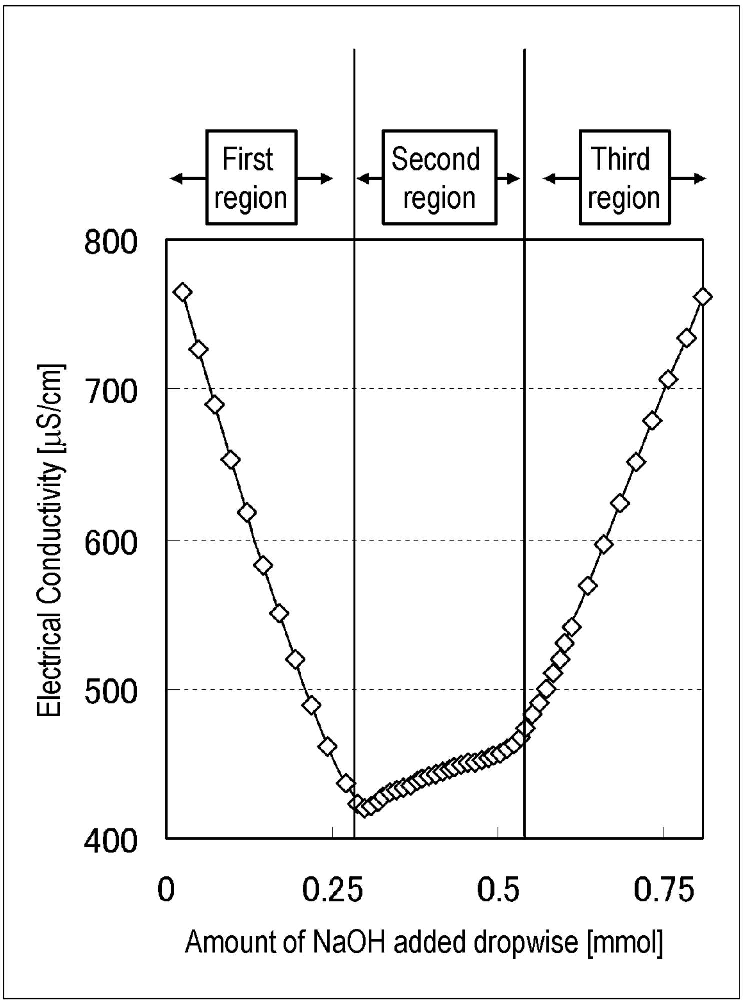
First region
Second region
Third region
800
700
600
500
400
Electrical Conductivity [μS/cm]
0
0.25
0.5
0.75
Amount of NaOH added dropwise [mmol]

[Figure 2]

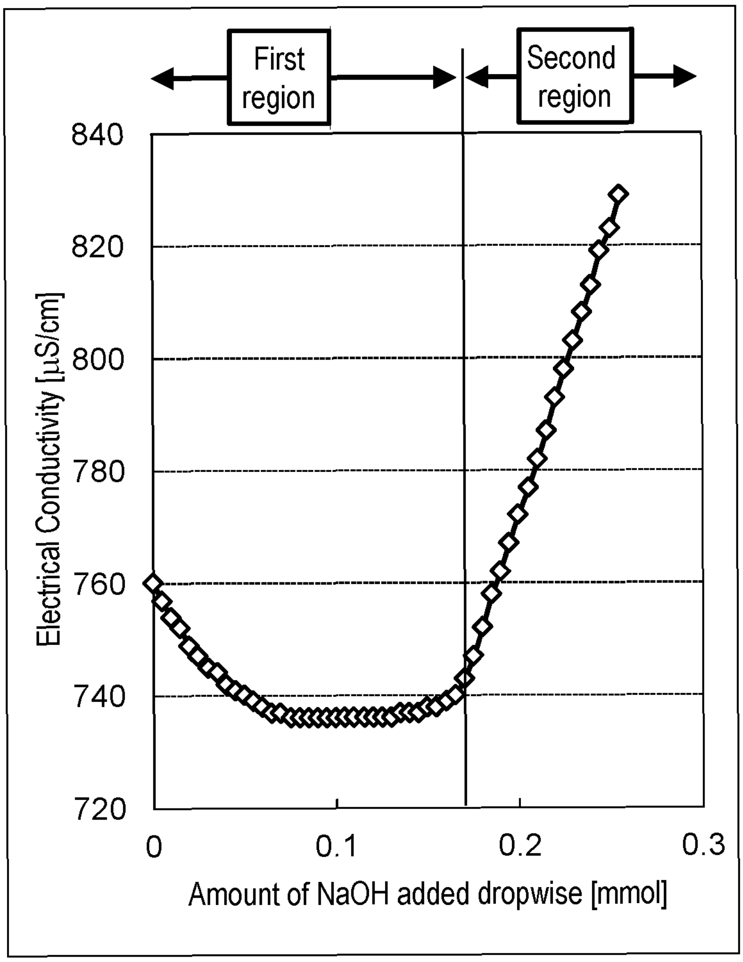
First region
Second region
840
820
800
780
760
740
720
Electrical Conductivity [µS/cm]
0
0.1
0.2
0.3
Amount of NaOH added dropwise [mmol]

**INTERNATIONAL SEARCH REPORT**

International application No.
PCT/JP2019/033800

A. CLASSIFICATION OF SUBJECT MATTER
Int.Cl. C08L1/02(2006.01)i, C08K3/08(2006.01)i, C08K5/19(2006.01)i, C08L101/00(2006.01)i

According to International Patent Classification (IPC) or to both national classification and IPC

B. FIELDS SEARCHED
Minimum documentation searched (classification system followed by classification symbols)
Intel. C08L1/02, C08K3/08, C08K5/19, C08L101/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2011/071156 A1 (KAO CORP.) 16 June 2011, claims, paragraphs [0022], [0066]-[0073], examples & US 2012/0283363 A1, claims, paragraphs [0029], [0075]-[0081], examples & EP 2511346 A1 & CN 102652154 A | 1-11 |
| X | JP 2011-47084 A (SUMITOMO BAKELITE CO., LTD.) 10 March 2011, claims, paragraphs [0029], [0030], examples (Family: none) | 1-11 |

☒ Further documents are listed in the continuation of Box C.
☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 November 2019 (08.11.2019) | 19 November 2019 (19.11.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
pctJP2019033800

C (Continuation). DOCUMENTS CONSIDERED TO BE RELEVANT

| Category* | Citation of document, with indication, where appropriate, of the relevant passages | Relevant to claim No. |
|---|---|---|
| A | WO 2016/152491 A1 (KAO CORP.) 29 September 2016 & US 2018/0118991 A1 & EP 3275931 A1 & CN 107531941 A | 1-11 |
| A | JP 2018-104502 A (NIPPON PAPER INDUSTRIES CO., LTD.) 05 July 2018 (Family: none) | 1-11 |
| A | JP 2013-151661 A (KAO CORP.) 08 August 2013 & US 2015/0011685 A1 & EP 2799491 A1 & CN 104024334 A | 1-11 |
| A | JP 2010-195866 A (SANYO CHEMICAL INDUSTRIES, LTD.) 09 September 2010 (Family: none) | 1-11 |
| A | JP 2017-66556 A (OJI HOLDINGS CORPORATION) 06 April 2017 & US 2018/0282946 A1 & EP 3358075 A1 & CN 108138446 A & KR 10-2018-0051634 A | 1-11 |
| A | WO 2011/111612 A1 (TOPPAN PRINTING CO., LTD.) 15 September 2011 & US 2013/0000512 A1 & EP 2546297 A1 & CN 102791789 A & KR 10-2013-0018722 A | 1-11 |
| A | WO 2017/138574 A1 (NIPPON PAPER INDUSTRIES CO., LTD.) 17 August 2017 & US 2019/0127557 A1 & EP 3415537 A1 & CN 108602896 A | 1-11 |
| A | JP 2017-110085 A (DKS CO., LTD.) 22 June 2017 (Family: none) | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011140738 A
- JP 2012021081 A
- JP 2018044101 A


### Non-patent literature cited in the description


- **SEAGAL et al.** *Textile Research Journal,* 1959, vol. 29, 786